# EUROPEAN PATENT APPLICATION

(11) **EP 1 489 526 A2**
(43) Date of publication of application: **22.12.2004**
(21) Application number: 04014152.5
(22) Date of filing: 16.06.2004
(51) Int. Cl.: G06F 17/30, G06F 17/21

(54) **Electronic apparatus and web page generating method**

(30) Priority: 18.06.2003 JP 2003173480; 31.05.2004 JP 2004161812
(71) Applicant: Ricoh Company Ltd., Tokyo 143-8555 (JP)
(72) Inventor: Takahashi, Seiji, Tokyo (JP)
(74) Representative: Engelhard, Maximilian, Dr.

(57) **Abstract**

An electronic apparatus includes a display format data acquiring part (17) to acquire, via a network, display format data including information related to a display format of a Web page that is requested to be displayed, and a Web page generating part (12, 15) to generate the Web page based on the display format data acquired by said display format data acquiring part.

## Description

### BACKGROUND OF THE INVENTION

### 1. Field of the Invention

The present invention generally relates to electronic apparatuses and Web page generating methods, and more particularly to an electronic apparatus and a Web page generating method for generating a Web page.

### 2. Description of the Related Art

Recently, not only general computers, but also various kinds of embedded devices or embedded equipments, function as Web servers. For example, image processing apparatuses, such as printers, facsimile machines and copying machines, include apparatuses which provide various information by a Web page with respect to terminals and the like connected to the apparatuses via a network. The various information provided include status of devices or equipments, stored document information, spooled jobs, and address directories used for facsimile and electronic mail (e-mail) communications. An advantage of providing such information by the Web page is that the terminal which is to receive the information simply needs to have a general-purpose Web browser installed therein and that it is unnecessary to install a special software in the terminal. Other advantages of providing the information by the Web page are that it is possible to confirm information related to a device or equipment at a remote location, without being dependent on a platform of the terminal.

A description will be given of a process of generating a Web page requested from a terminal in the embedded device which functions as the Web server.

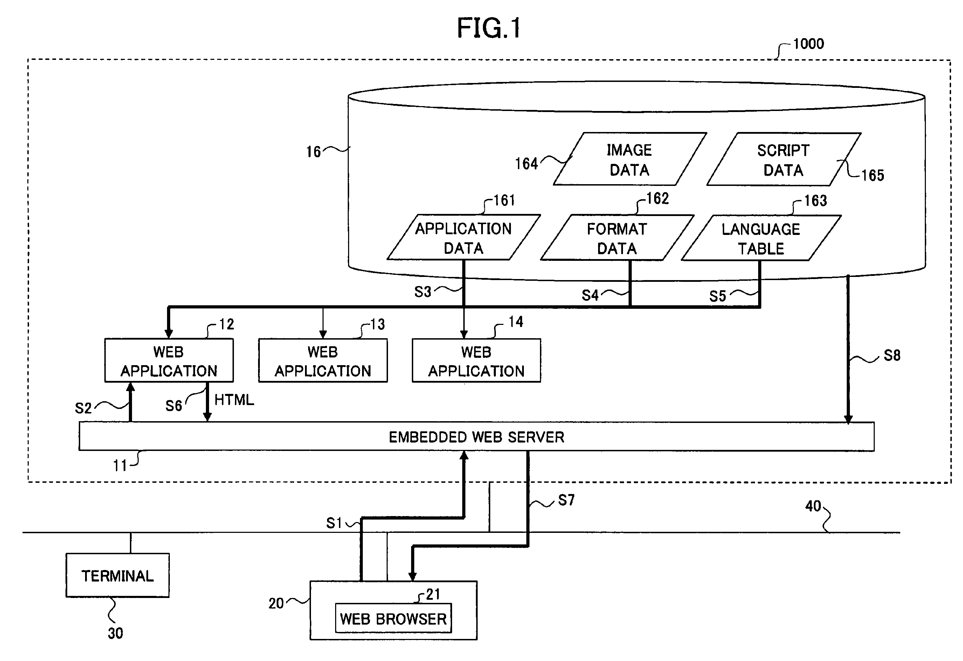

FIG. 1 is a diagram for explaining a Web page generating process of an example of a conventional embedded device. In FIG. 1, an image processing apparatus 1000, such as a printer, is used as the embedded device. The image processing apparatus 1000 and terminals 20 and 30 which may be Personal Digital (or Data) Assistants (PDAs), portable telephones and the like and function as display units, are connected via a network 40 such as the Internet and Local Area Network (LAN).

The image processing apparatus 1000 includes an embedded Web server 11, Web server applications 12, 13 and 14, and a Read Only Memory (ROM) 16. The ROM 16 stores application data 161, format data 162, language table 163, image data 164 and script data 165.

The embedded Web server 11 is a Demon (or Daemon) program which controls Hypertext Transfer Protocol (HTTP) communications with the terminal 20 or the like. The embedded Web server 11 analyzes HTTP requests sent from the terminal 20 or the like, and calls the Web application 12 or the like. Further, the embedded Web server 11 sends Hypertext Markup Language (HTML) data generated by the Web application 12 or the like, that is, a Web page that is generated, to the terminal 20 or the like.

The Web application 12 and the like are programs which generate a Web page displaying information requested from the terminal 20 or the like. A plurality of instances are provided in the Web application 12 and the like depending on the kind of Web page.

The ROM 16 is a general read-only memory.

The application data 161 is referred to when the Web application 12 or the like generates the Web page. The application data 161 includes information itself to be inserted in the Web page or, information which forms a basis for generating the information to be inserted in the Web page.

The format data 162 is an Extensible Stylesheet Language (XSL) format data in which format information of the Web page is defined, and is stored in the ROM 16 in the form of a file. The language table 163 is Extensible Markup Language (XML) format data in which character strings used for display in each of a plurality of languages are defined, with respect to information having different displays depending on the language (natural language such as Japanese and English) used for the display, of the information to be displayed in the Web page.

The image data 164 is a Graphics Interchange Format (GIF) data or the like displayed in the Web page that is provided with respect to the terminal 20 or the like. The script data 165 includes Java (registered trademark) scripts and the like to be included in the Web page that is provided with respect to the terminal 20 or the like.

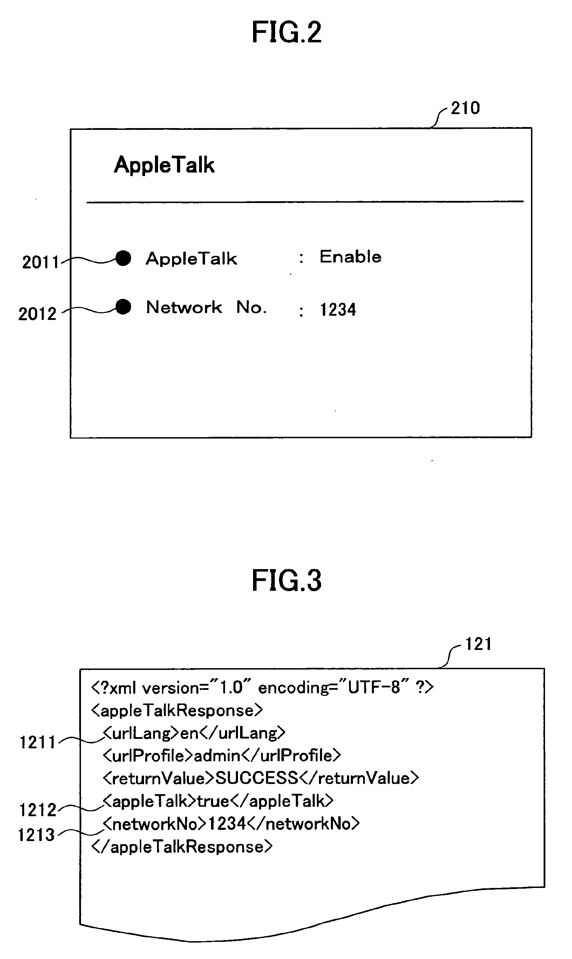

Suppose that a user of the terminal 20 wishes to see predetermined information of the image processing apparatus 1000, and inputs an Uniform Resource Locator (URL) of the image processing apparatus 1000 by the Web browser 21 of the terminal 20. In this case, the terminal 20 makes a request (HTTP request) with respect to the image processing apparatus 1000, in a step S1, requesting the image processing apparatus 1000 to send the Web page displaying the predetermined information. For example, the terminal 20 requests a Web page 210 shown in FIG. 2.

FIG. 2 is a diagram showing an example of the Web page that is generated by the image processing apparatus 1000 and displayed. The web page 210 shown in FIG. 2 displays, in English, information related to network functions of the image processing apparatus 1000. A description 2011 indicates that an AppleTalk protocol may be used, and a description 2012 indicates a network number.

The embedded Web server 11 which receives the HTTP request calls a Web application corresponding to the HTTP request, in a step S2. In this case, it is assumed for the sake of convenience that the Web application 12 is called.

The Web application 12 refers to the application data 161 or the like and carries out a predetermined process, such as acquiring information related to network functions, and generates XML data (hereinafter referred to as "base data") including information to be displayed in the Web page 210 based on a result of the predetermined process, in a step S3.

FIG. 3 is a diagram showing an example of a definition of the base data. In a base data 121 shown in FIG. 3, a character string "en" surrounded by urlLang tags in a description 1211 indicates information for identifying a display language requested from the terminal 20 or the like. In this example, the character string "en" indicates the display language as being English. Accordingly, an English version of the Web page 210 is requested by the description 1211.

Descriptions 1212 and 1213 are related to information displayed in the Web page 210. In other words, a character string "true" surrounded by appleTalk tags in the description 1212 has a value indicating whether or not to use the AppleTalk protocol in the image processing apparatus 1000, and a character string "1234" surrounded by networkNo tags in the description 1213 has a value indicating the network number.

Furthermore, the Web application 12 reads the format data 162 from the ROM 16 in a step S4, and reads the language table 163 from the ROM 16 in a step S5. The Web application 12 applies the read format data 162 and language table 163 to the base data 121 to carry out an XSL conversion, and generates the Web page 210, in a step S6.

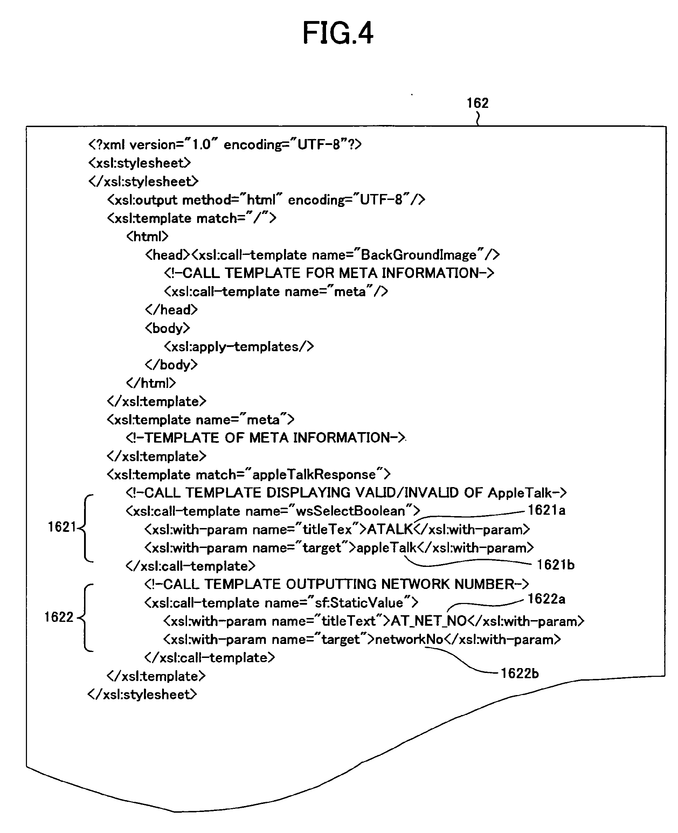

FIG. 4 is a diagram showing an example of a definition of the format data 162. In the format data 162 shown in FIG. 4, descriptions 1621 and 1622 respectively correspond to the descriptions 2011 and 2012 shown in FIG. 2.

A description 1621b indicates whether or not to use the AppleTalk protocol in the description 2011 shown in FIG. 2, and a description 1622b indicates information for acquiring from the base data 121 a character string that is displayed as the network number in the description 2012 shown in FIG. 2. In other words, it is defined that the character string indicating whether or not to use the AppleTalk protocol in the description 1621b specifies a value of an element surrounded by the AppleTalk tags in the base data 121, and it is defined that the character string indicating the network number in the description 1622b specifies a value of an element surrounded by the networkNo. Tags in the base data 121.

Descriptions 1621a and 1622a indicate information for identifying character strings to be displayed as item names in the corresponding descriptions 2011 and 2012 shown in FIG. 2. In other words, the display of the item name differs depending on the language, but the format data 162 is used regardless of the kind of language, and thus, symbols (hereinafter referred to as "key character string") for identifying character strings (AppleTalk, Network No.) that are actually displayed are specified. The character string that is actually displayed is hereinafter referred to as "displayed character string".

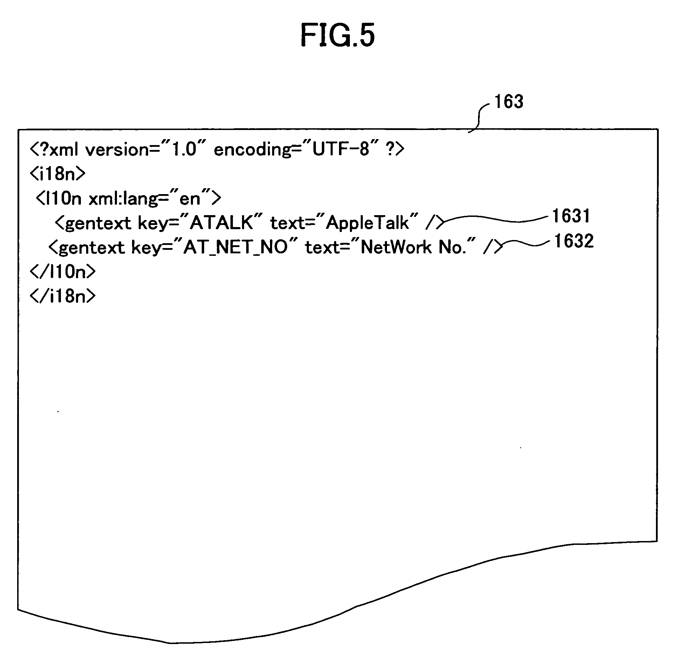

The displayed character string corresponding to each key character string is registered in the language table 163. FIG. 5 is a diagram showing an example of a definition of the English version language table 163. A description 1631 in the language table 163 shown in FIG. 5 indicates that a displayed character string corresponding to a key character string ATALK is "AppleTalk". In addition, a description 1632 indicates that a displayed character string corresponding to a key character string AT_NET_NO is "Network No.". Although FIG. 5 shows the English version language table 163, similar definitions are made with respect to each kind of language.

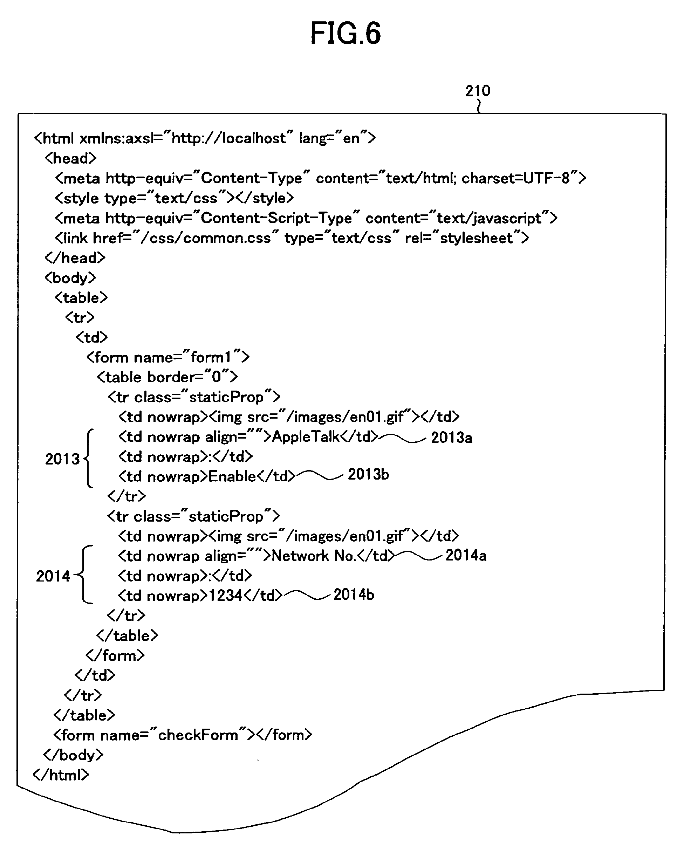

FIG. 6 is a diagram showing an example of a definition of the Web page 210 that is generated by the Web application 12. In the Web page 210 shown in FIG. 6, descriptions 2013 and 2014 respectively correspond to the descriptions 2011 and 2012 shown in FIG. 2.

A description 2013a is output by the Web application 12 by replacing the key character string ATALK to "AppleTalk" according to the definitions of the format data 162 and the language table 163. A description 2013b is output by the Web application 12 based on the format data 162 and a value (true) in the description 1212 of the base data 121. Similarly, a description 2014a is output by the Web application 12 by replacing the key character string AT_NET_NO to "Network No." according to the definitions of the format data 162 and the language table 163, and a description 2014b is output by the Web application 12 based on the format data 162 and a value (1234) in the description 1213 of the base data 121.

Returning now to the description of FIG. 1, when the embedded Web server 11 which receives the Web page 210 from the Web application 12 sends the Web page 210 to the terminal 20 by a HTTP response, the Web browser 21 of the terminal 20 displays the Web page 210 in a step S7, and the user can inspect the desired Web page 210. In a case where the Web page 210 displays image data or executes Java scripts, the image data 164 or the script data 165 is downloaded from the image processing apparatus 1000 to the terminal 20, in a step S8.

Accordingly, even an embedded device such as the image processing apparatus 1000 can provide information by the Web page 210 with respect to the terminal 20 or the like, similarly to a Web server which is formed by a general server computer.

However, according to the conventional embedded device, the various data (hereinafter referred to as "resource data") necessary for generating the Web page 210, such as the format data 162, the language table 163, the image data 164 and the script data 165, must be prestored in the ROM 16 at the time of shipping or the like of the embedded device.

Since the ROM 16 is a read-only memory, it requires an extremely troublesome operation to modify the resource data after shipping or the like of the embedded device. Consequently, it is extremely difficult to modify the display format of the Web page that is generated by the embedded device at the end user, Original Equipment Manufacturer (OEM) or the like.

In addition, in order to reduce the cost of the embedded device, there are strict restrictions on the memory capacity that may be provided in the embedded device, and under such restrictions, it is not possible to store an extremely large amount of resource data. For this reason, it is difficult to provide various Web pages having rich representations.

### SUMMARY OF THE INVENTION

Accordingly, it is a general object of the present invention to provide a novel and useful electronic apparatus and Web page generating method, in which the problems described above are suppressed.

Another and more specific object of the present invention is to provide an electronic apparatus and a Web page generating method, which can easily modify a display format of a Web page that is generated.

Still another and more specific object of the present invention is to provide an electronic apparatus comprising display format data acquiring means for acquiring, via a network, display format data including information related to a display format of a Web page that is requested to be displayed; and Web page generating means for generating the Web page based on the display format data acquired by said display format data acquiring means. According to the electronic apparatus of the present invention, it is possible to easily modify the display format of the Web page, by modifying display format definition data which is managed externally of the electronic apparatus, even when the electronic apparatus is formed by an embedded device which makes rewriting of management information difficult, because the display format data may be managed externally of the electronic apparatus.

A further object of the present invention is to provide an electronic apparatus for providing a Web page to be displayed on a display unit which is coupled to the electronic apparatus via a network, comprising Web page generating means for generating the Web page that causes the display unit to acquire data used by the Web page from another electronic apparatus. According to the electronic apparatus of the present invention, it is possible to easily modify the display format of the Web page, by modifying the data in the other electronic apparatus, even when the electronic apparatus is formed by an embedded device which makes rewriting of management information difficult, because the Web page that is generated acquires the data, such as image data and script data, which need to be downloaded when displaying the Web page from the other electronic apparatus.

Another object of the present invention is to provide an electronic apparatus comprising display information generating means for generating display information data that includes display information to be provided via a network to a display unit having an XSL conversion function, wherein said display information generating means generates the display data so as to include location information of format information data having the format information to be applied to the display information data; and said display unit generates a Web page, by acquiring the format information data from another electronic apparatus different from the electronic apparatus based on the location information included in the display information data, and carrying out an XSL conversion by applying the format information data to the display information data. According to the electronic apparatus of the present invention, it is possible to easily modify the display format of the Web page, by modifying the format information data in the other electronic apparatus, even when the electronic apparatus is formed by an embedded device which makes rewriting of management information difficult, because the Web page is generated using the format information data managed in the other electronic apparatus.

Still another object of the present invention is to provide a Web page generating method for an electronic apparatus comprising a display format data acquiring procedure acquiring, via a network, display format data including information related to a display format of a Web page that is requested to be displayed; and a Web page generating procedure generating the Web page based on the display format data acquired by said display format data acquiring procedure. According to the Web page generating method of the present invention, it is possible to easily modify the display format of the Web page, by modifying display format definition data which is managed externally of the electronic apparatus, even when the electronic apparatus is formed by an embedded device which makes rewriting of management information difficult, because the display format data may be managed externally of the electronic apparatus.

A further object of the present invention is to provide a Web page generating method for an electronic apparatus, comprising a Web page generating procedure generating a Web page which causes a display unit, which is coupled to the electronic apparatus via a network, to acquire data used in the Web page from another electronic apparatus which is different from the electronic apparatus, in response to a Web page request from the display unit; and a Web page sending procedure sending the Web page generated by said Web page generating procedure to the display unit. According to the Web page generating method of the present invention, it is possible to easily modify the display format of the Web page, by modifying the data in the other electronic apparatus, even when the electronic apparatus is formed by an embedded device which makes rewriting of management information difficult, because the Web page that is generated acquires the data, such as image data and script data, which need to be downloaded when displaying the Web page from the other electronic apparatus.

Another object of the present invention is to provide a Web page generating method which uses a display unit having an XSL conversion function and displaying a Web page generated by use of the XSL conversion function, and an electronic apparatus providing display information to be displayed in the Web page to the display unit, comprising a display information data generating procedure generating display information data including location information of format information data which includes the display information and format information of the Web page, by the electronic apparatus, in response to a request from the display unit; and a Web page generating procedure generating the Web page, by the display unit, by acquiring the format information data from another electronic apparatus different from the electronic apparatus based on the location information included in the display information data received from the electronic apparatus, and carrying out an XSL conversion by applying the format information data to the display information data. According to the Web page generating method of the present invention, it is possible to easily modify the display format of the Web page, by modifying the format information data in the other electronic apparatus, even when the electronic apparatus is formed by an embedded device which makes rewriting of management information difficult, because the Web page is generated using the format information data managed in the other electronic apparatus.

Other objects and further features of the present invention will be apparent from the following detailed description when read in conjunction with the accompanying drawings.

### BRIEF DESCRIPTION OF THE DRAWINGS

FIG. 1 is a diagram for explaining a Web page generating process of an example of a conventional embedded device;
FIG. 2 is a diagram showing an example of a Web page that is generated by an image processing apparatus and displayed;
FIG. 3 is a diagram showing an example of a definition of base data;
FIG. 4 is a diagram showing an example of a definition of format data;
FIG. 5 is a diagram showing an example of a definition of an English version language table;
FIG. 6 is a diagram showing an example of a definition of a Web page that is generated by a Web application;
FIG. 7 is a diagram showing a functional structure of an image processing apparatus forming an electronic apparatus according to the present invention;
FIG. 8 is a diagram for explaining a Web page generating process of a first embodiment of the electronic apparatus according to the present invention;
FIG. 9 is a diagram for explaining an acquisition of a language table by File Transfer Protocol (FTP);
FIG. 10 is a flow chart for explaining a process of an Extensible Stylesheet Language Transformations (XSLT) processor of the first embodiment;
FIG. 11 is a diagram for explaining a Web page generating process of a second embodiment of the electronic apparatus according to the present invention;
FIG. 12 is a diagram showing a definition of base data in the second embodiment;
FIG. 13 is a diagram for explaining a Web page generating process of a third embodiment of the electronic apparatus according to the present invention;
FIG. 14 is a diagram for explaining an acquisition of format data by FTP;
FIG. 15 is a flow chart for explaining a process of an XSLT processor of the third embodiment;
FIG. 16 is a diagram for explaining a Web page generating process of a fourth embodiment of the electronic apparatus according to the present invention;
FIG. 17 is a diagram showing a definition of base data in the fourth embodiment;
FIG. 18 is a diagram for explaining a Web page generating process of a fifth embodiment of the electronic apparatus according to the present invention;
FIG. 19 is a diagram showing a definition of base data in the fifth embodiment;
FIG. 20 is a diagram for explaining a storage of image data in a terminal;
FIG. 21 is a diagram showing a definition of base data for a case where a path name in a terminal is used as location information of image data;
FIG. 22 is a diagram for explaining a process of a sixth embodiment of the electronic apparatus according to the present invention;
FIG. 23 is a diagram showing a definition of base data in the sixth embodiment;
FIG. 24 is a diagram for explaining a storage of resource data in a predetermined server;
FIG. 25 is a diagram showing a definition of base data for a case where the resource data is stored in a resource server;
FIG. 26 is a diagram showing a structure of an image processing system employing a seventh embodiment of the electronic apparatus according to the present invention;
FIG. 27 is a sequence diagram for explaining a security information updating process of the seventh embodiment of the electronic apparatus;
FIG. 28 is a diagram showing a structure of an image processing system employing an eighth embodiment of the electronic apparatus according to the present invention; and
FIG. 29 is a sequence diagram for explaining a Web page generating process of the eighth embodiment of the electronic apparatus.

### DESCRIPTION OF THE PREFERRED EMBODIMENTS

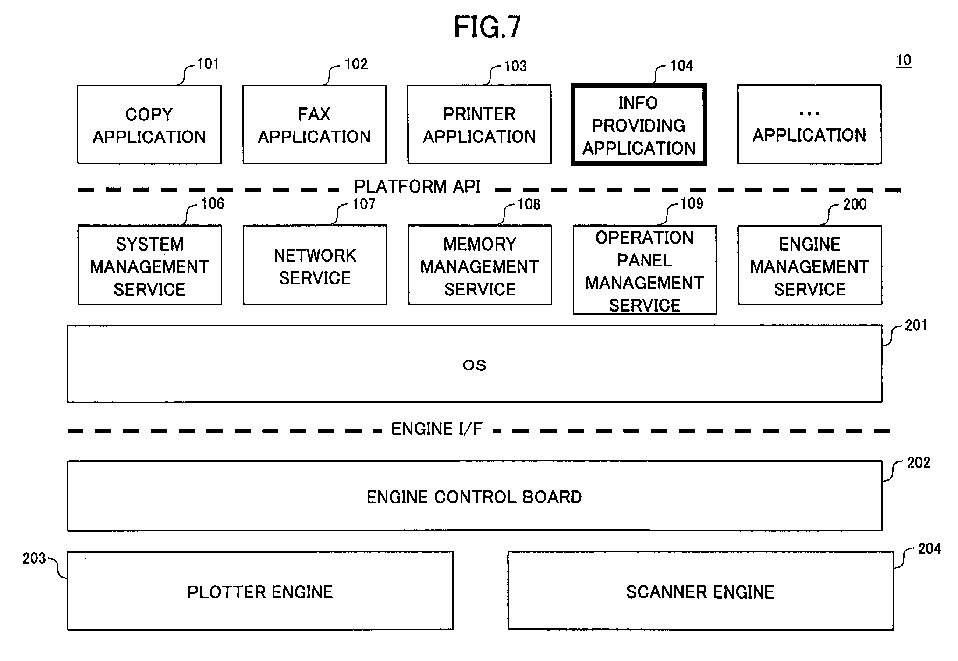

A description will be given of embodiments of an electronic apparatus according to the present invention and a Web page generating method according to the present invention, by referring to FIGS. 7 through 29. The electronic apparatus according to the present invention may be formed by an embedded device or an embedded equipment, such as an image processing apparatus. The embedded device generally refers to a device which is embedded with a program for realizing a specific function and a processor for executing the program. For example, the embedded device may be selected from telephone sets, printers, television sets, air conditioners, portable information terminals and the like.

FIG. 7 is a diagram showing a functional structure of an image processing apparatus forming an electronic apparatus according to the present invention. An image processing apparatus 10 shown in FIG. 7 includes hardware resources, such as a plotter engine 203 and a scanner engine 204, for carrying out independent image processings, an engine control board 202, an Operating System (OS) 201, a system management service 106, a network service 107, a memory management service 108, an operation panel management service 109, an engine management service 200, and various kinds of applications, such as a copying application 101, a facsimile application 102, a printer application 103 and an information providing application 104. In other words, the image processing apparatus 10 has a plurality of applications to carry out processes peculiar to composite services of a printer, a copying machine or a facsimile machine.

The engine control board 202 controls the independent functions of the image processing apparatus 10, such as the plotter engine 203 and the scanner engine 204, and provides the functions of the engine control board 202 to the OS 201 and the like via an engine interface (I/F).

The OS 201 is formed by a UNIX (registered trademark) operating system or the like, and executes in parallel the processes of the various software installed as applications, such as the copying application 101 and the facsimile application 102.

The system management service 106, the network service 107, the memory management service 108, the operation panel management service 109 and the engine management service 200 provide respective functions to an application in a higher layer (or level), such as the copying application 101, via an Application Programming Interface (API). In other words, the system management service 106 provides functions related to system management, and the network service 107 provides functions related to network communication. In addition, the memory management service 108 provide functions related to memory management, and the operation panel management service 109 provide functions related to an operation panel of the image processing apparatus 10. Further, the engine management service 200 provides functions for controlling the plotter engine 203 and the scanner engine 204 via the engine control board 202.

The copying application 101 provides copying functions, and the facsimile application 102 provides facsimile functions. The printer application 103 includes Page Description Language (PDL), Printer Control Language (PCL) and Post Script (PS), and provides printer functions. Moreover, the information providing application 104 carries out a process for generating a Web page to display the information requested from the terminal 20.

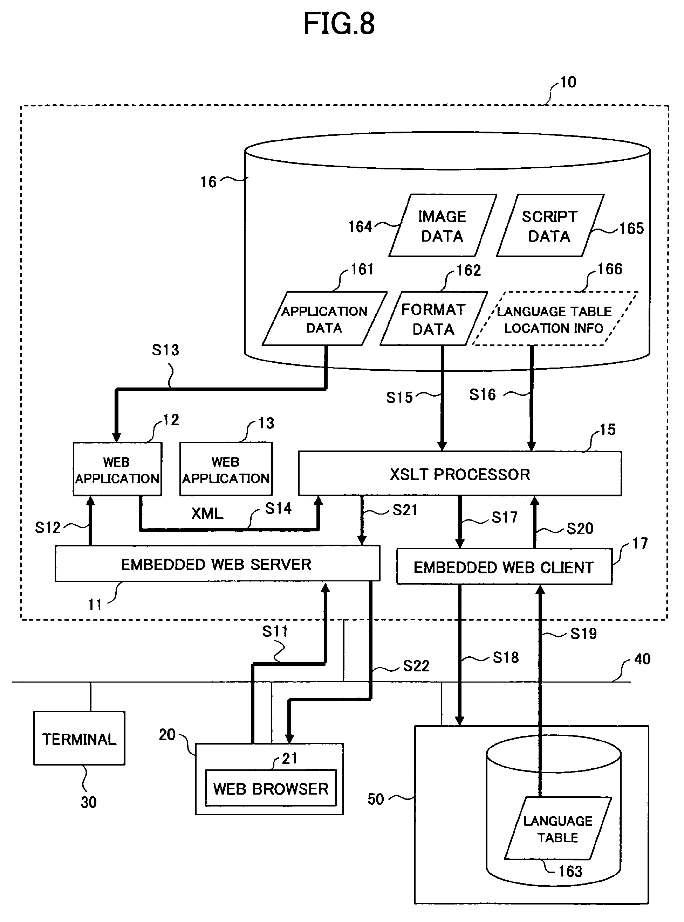

Next, a description will be given of a processing sequence of the image processing apparatus 10 shown in FIG. 7. FIG. 8 is a diagram for explaining a Web page generating process of a first embodiment of the electronic apparatus according to the present invention. This first embodiment of the electronic apparatus employs a first embodiment of a Web page generating method according to the present invention. In FIG. 8, those parts which are the same as those corresponding parts in FIG. 1 are designated by the same reference numerals, and a description thereof will be omitted. Functions of the image processing apparatus 10 shown in FIG. 8 are installed as portions of the functions provided by the network service 107 and the information providing application 104 shown in FIG. 7. In other words, the embedded Web server 11 corresponds to a portion of the functions provided by the network service 107, and the other parts such as the Web application 12 correspond to a portion of the functions provided by the information providing application 104.

When FIG. 8 is compared to FIG. 1, it may be seen that the image processing apparatus 10 shown in FIG. 8 is additionally provided with an Extensible Stylesheet Language Transformations (XSLT) processor 15 and an embedded Web client 17, and is connected to a resource server 50 via the network 40. The network 40 may be formed by one or more cable networks, one or more wireless networks or, a combination of cable and wireless networks. The cable networks may be optical networks. The image processing apparatus 10 shown in FIG. 8 does not have a language table 163 within the ROM 16. For the sake of convenience, the illustration of the Web application 14 is omitted in FIG. 8.

The XSLT processor 15 is formed by a program which carries out an XSL conversion based on XML data and XSL data, and generates XML data, HTML data or the like in accordance with the format information of the XSL data. The XSL processor 15 is used in common regardless of the kind of the plurality of Web applications 12 through 14, and generates a Web page based on the XML data generated by the Web application 12 or the like.

The embedded Web client 17 is formed by a module which provides Web client functions to the image processing apparatus 10. In other words, the Web client 17 sends an HTTP request including a predetermined request to the resource server 50 based on a request from the XSLT processor 15, and receives an HTTP response which is received from the resource server 50 in response to the HTTP request.

The resource server 50 is formed by a computer which functions as a Web server, and includes a language table 163. The resource server 50 returns an HTTP response including the language table 163 in response to an HTTP request which requests the language table 163. The resource server 50 does not necessarily have to be formed by a computer, and may be formed by a device or equipment which functions as a Web server, similarly to the image processing apparatus 10. For example, in a case where the resource server 50 is formed by an image processing apparatus, the image processing apparatus 10 may be formed by a low-end model and the resource server 50 may be formed by a high-end model.

When the user of the terminal 20 inputs the URL of the image processing apparatus 10 from the Web browser 21 of the terminal 20 so as to refer to predetermined information of the image processing apparatus 10, the terminal 20 sends an HTTP request requesting the image processing apparatus 10 to send a Web page 210 displaying the predetermined information, in a step S11.

The embedded Web server 11 which receives the HTTP request calls a Web application corresponding to the HTTP request, in a step S12. In this case, it is assumed for the sake of convenience that the Web application 12 is called.

The Web application 12 carries out a predetermined process by referring to the application data 161 or the like, and generates XML data (hereinafter referred to as "base data") 121 including the information to be displayed on the Web page based on a result of the predetermined process, in a step S13. The base data that is generated may be similar to that shown in FIG. 3.

Furthermore, the Web application 12 requests the XSLT processor 15 to generate the Web page (HTML data) 210 for displaying the information included in the base data 121, in a step S14. In order to generate the Web page 210, the XSLT processor 15 acquires data in which information related to the display format of the Web page 210 is defined, in steps S15 through S20 described hereunder.

In other words, the XSLT processor 15 reads the format data 162 shown in FIG. 4 from the ROM 16 in the step S15, and refers to information (hereinafter referred to as "language table location information 166") that is stored in the ROM 16 and is related to a storage location (or position) of the language table 163 shown in FIG. 5 in the step S16. For example, the URL or the like of the language table 163 on the network 40 corresponds to the language table location information 166. Accordingly, in FIG. 8, the language table location information 166 is indicated by the URL with respect to the resource server 50.

When the XSLT processor 15 notifies the language table location information 166 with respect to the embedded Web client 17 and requests acquisition of the language table 163 from the location indicated by the language table location information 166 in the step S17, the embedded Web client 17 sends an HTTP request requesting the resource server 50 to send the language table 163 in the step S18. When the resource server 50 sends an HTTP response including the language table 163 to the image processing apparatus as a response with respect to the HTTP request from the embedded Web client 17 in the step S19, the embedded Web client 17 receives the HTTP response and outputs the language table 163 to the XSLT processor 15 in the step S20.

The XSLT processor 15 carries out an XSL conversion based on the base data 121, the format data 162 acquired from the ROM 16 and the language table 163 acquired from the resource server 50, and generates the Web page 210 shown in FIG. 2, in a step S21.

When the embedded Web server 11 which receives the Web page 210 from the XSLT processor 15 sends the Web page 210 to the terminal 20 as an HTTP response, the Web page 210 is displayed by the Web browser 21 of the terminal 20 in a step S22, and the user can inspect the desired Web page 210.

In this embodiment, it is assumed for the sake of convenience that the image processing apparatus 10 acquires the language table 163 using the HTTP, but the protocol used to acquire the language table 163 via the network 40 is of course not limited to the HTTP.

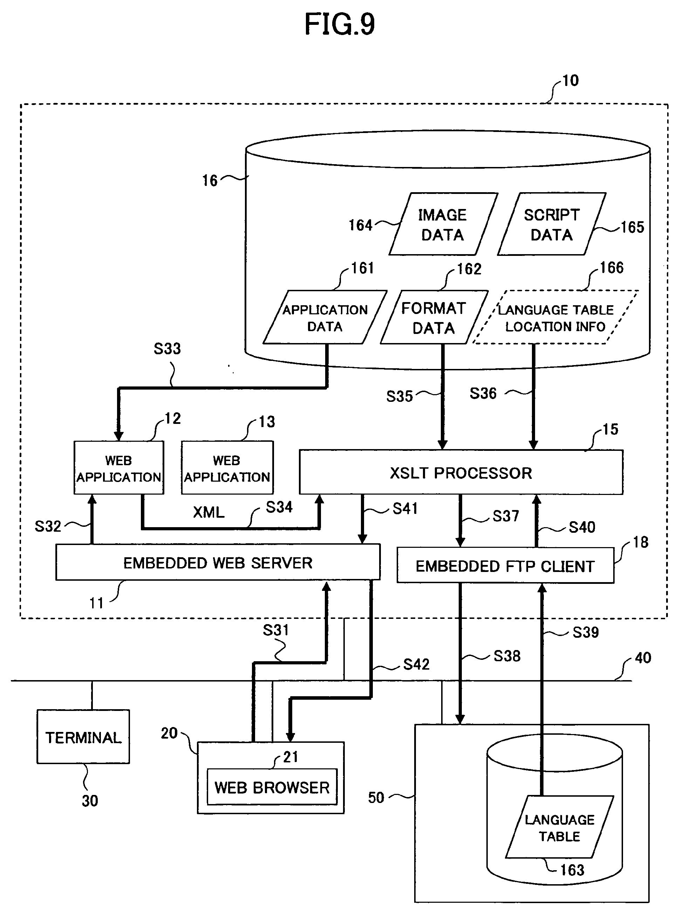

FIG. 9 is a diagram for explaining an acquisition of the language table 163 by File Transfer Protocol (FTP). In FIG. 9, those parts which are the same as those corresponding parts in FIG. 8 are designated by the same reference numerals, and a description thereof will be omitted. In the image processing apparatus 10 shown in FIG. 9, an embedded FTP client 18 is provided in place of the embedded Web client 17. The embedded FTP client 18 is formed by a program which provides client functions of FTP communications to the image processing apparatus 10.
The resource server 50 shown in FIG. 9 is formed by a computer which functions as an FTP server. Steps S31 through S42 shown in FIG. 9 correspond to the steps S11 through S22 shown in FIG. 8.

By employing the functional structure of the image processing apparatus 10 shown in FIG. 9, it becomes possible to acquire the language table 163 from the resource server 50 by the FTP. In other words, the Web page generating process of the image processing apparatus 10 shown in FIG. 9 is basically the same as that of the image processing apparatus 10 shown in FIG. 8, but compared to the embedded Web client 17 shown in FIG. 8 which acquires the language table 163 from the resource server 50 by the HTTP in the steps S18 and S19, the embedded FTP client 18 shown in FIG. 9 acquires the language table 163 from the resource server 50 by the FTP in steps S38 and S39.

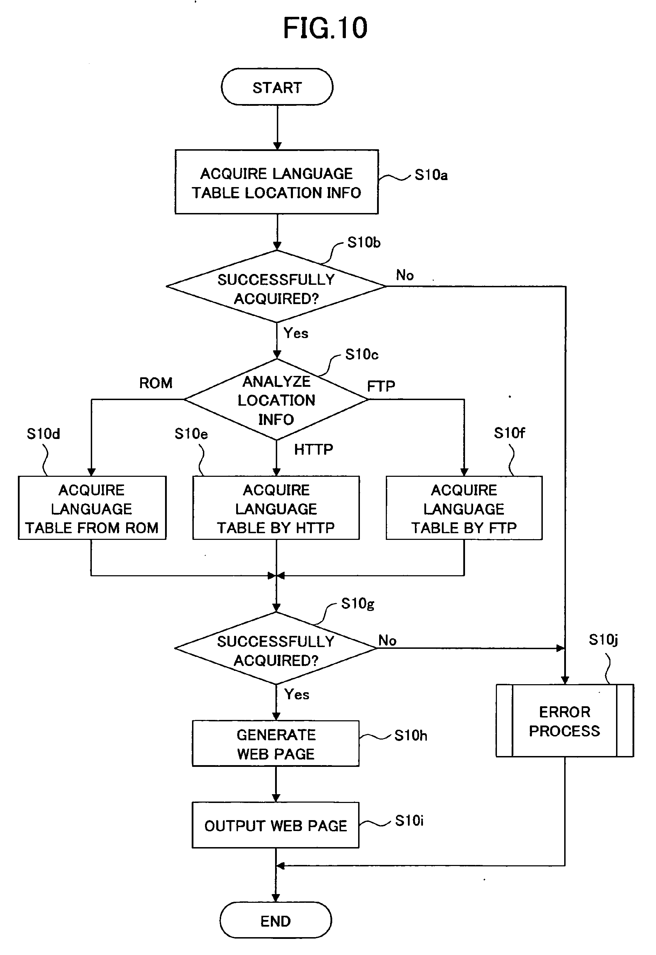

The process of acquiring the language table 163 from the ROM 16 in the conventional case shown in FIG. 1, the process of acquiring the language table 163 from the resource server 50 by the HTTP in the case shown in FIG. 8, and the process of acquiring the language table 163 from the resource server 50 by the FTP, are not in a mutually exclusive relationship. In other words, the process shown in FIG. 8 may be combined with at least one of the processes shown in FIGS. 1 and 9, and the process shown in FIG. 9 may be combined with at least one of the processes shown in FIGS. 1 and 8. If the three processes shown in FIGS. 1, 8 and 9 are combined, the functional structure of the image processing apparatus 10 includes the embedded FTP client 18 in addition to the functional structure shown in FIG. 8, and the language table 163 is also stored in the ROM 16 as shown in FIG. 1, and the process of the XSLT processor 15 in this case becomes as shown in FIG. 10.

FIG. 10 is a flow chart for explaining the process of the XSLT processor 15 of the first embodiment. The process shown in FIG. 10 corresponds to the steps S16 through S21 shown in FIG. 8.

In FIG. 10, a step S10a acquires the language table location information 166 from the ROM 16, and a step S10b decides whether or not the language table location information 166 is successfully acquired. If the decision result in the step S10b is NO, a step S10j carries out a predetermined error process. On the other hand, if the decision result in the step S10b is YES, a step S10c analyzes the language table location information 166 and confirms the acquisition method for acquiring the language table 163.

If the language table location information 166 indicates a path in the ROM 16, a step S10d acquires the language table 163 specified by the path from the ROM 16. If the language table location information 166 indicates acquisition of the language table 163 by the HTTP, a step S10e uses the embedded Web client 17 to acquire the language table 163 from the resource server 50 by the HTTP. If the language table location information 166 indicates acquisition of the language table 163 by the FTP, a step S10f uses the embedded FTP client 18 to acquire the language table 163 from the resource server 50 by the FTP.

After the step S10d, S10e or S10f, a step S10g decides whether or not the language table 163 is successfully acquired. If the decision result in the step S10g is NO, the step S10j carries out the predetermined error process. On the other hand, if the decision result in the step S10g is YES, a step S10h generates the Web page 210 from the base data 121, the format data 162 and the language table 163. A step S10i outputs the generated Web table 210 with respect to the embedded Web server 11, and the process ends.

Therefore, according to the image processing apparatus 10 of this first embodiment, the language table 163 managed by the resource server 50 can be acquired by the HTTP or FTP, and for this reason, it is not essential to store the language table 163 in the ROM 16. When the language table 163 is not stored in the ROM 16, it is possible to effectively utilize the limited memory capacity of the ROM 16. In addition, when it becomes necessary to modify the language table 163, it is only necessary to modify the language table 163 in the resource server 50. The language table 163 in the resource server 50 may be modified by a simple operation, similar to a file operation in the general personal computer or the like, and thus, the display format of the Web page generated by the image processing apparatus 10 may be modified with ease.

Moreover, the acquisition request from the embedded Web client 17 or the embedded FTP client 18 requesting the language table 163 to the resource server 50 is carried out by the XSLT processor 15 which is common to the Web applications 12 through 14. For this reason, it is unnecessary to provide an acquisition process that requests the language table 163 from the resource server 50 for each Web application.

Furthermore, it is possible to cope with a plurality of image processing apparatuses 10 by a single resource server 50. In other words, when the language table 163 is modified in the resource server 50, the modification may be reflected to the Web pages that are generated by each of the plurality of image processing apparatuses 10 which connect to the resource server 50.

In a case where the image processing apparatus 10 itself functions as the Web browser, such as a case where the Web page may be displayed on the operation panel of the image processing apparatus 10, the present invention may be similarly applied to the generation of the Web page that is displayed on the operation panel.

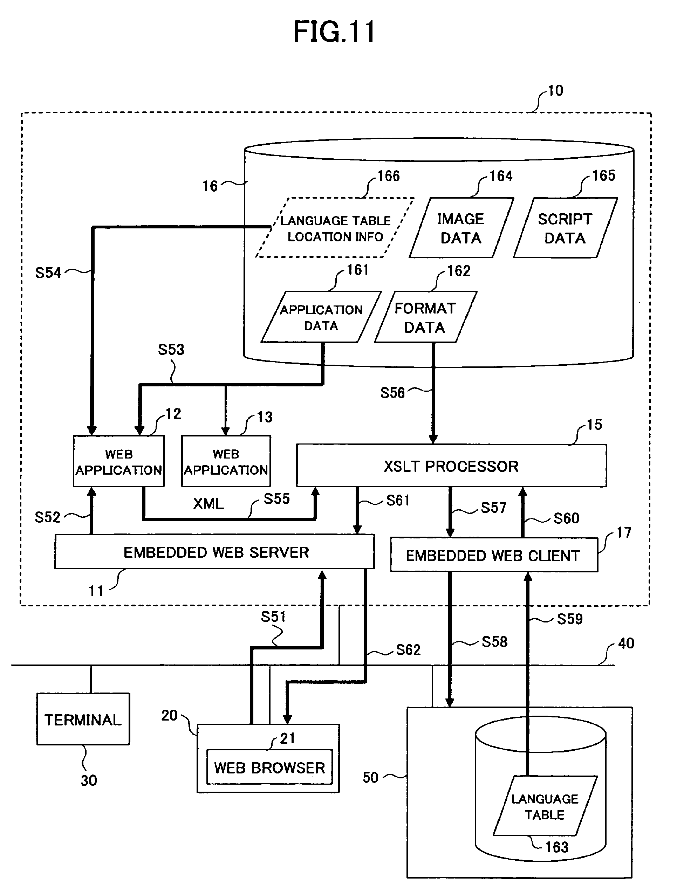

FIG. 11 is a diagram for explaining a Web page generating process of a second embodiment of the electronic apparatus according to the present invention. This second embodiment of the electronic apparatus employs a second embodiment of the Web page generating method according to the present invention. In FIG. 11, those parts which are the same as those corresponding parts in FIG. 8 are designated by the same reference numerals, and a description thereof will be omitted. In this second embodiment, each Web application refers to the language table location information 166. In FIG. 11, steps S51 through S62 correspond to the steps S11 through S22 shown in FIG. 8.

In FIG. 11, the process up to when the embedded Web server 11 calls the Web application 12 based on the HTTP request from the terminal 20, in the steps S51 and S52, is the same as the process of the steps S11 and S12 shown in FIG. 8.

The Web application 12 refers to the language table location information 166 when generating the base data 121 in the step S53, and outputs the contents of the language table location information 166 to the base data 121.

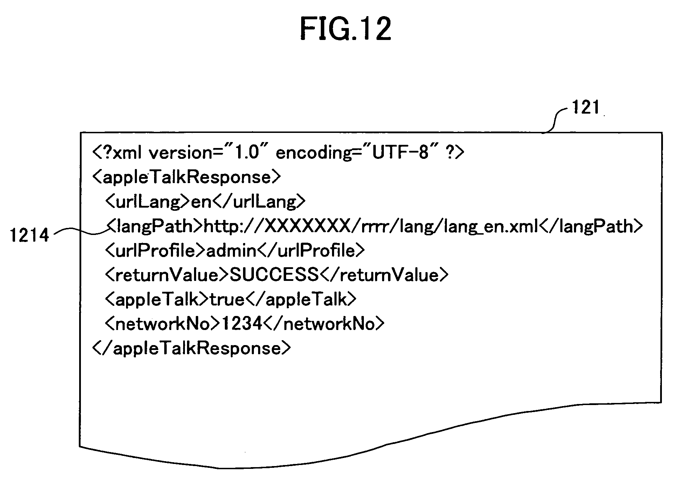

FIG. 12 is a diagram showing a definition of the base data 121 in the second embodiment. In the base data 121 shown in FIG. 12, a description 1214 indicating the language table location information 166 is output.

Accordingly, when the XSLT processor 15 of this second embodiment receives the request to generate the Web page 210 from the Web application 12 in the step S55, the XSLT processor 15 specifies the location of the language table 163 by referring to the description 1214 of the base data 121, and requests acquisition of the language table 163 with respect to the embedded Web client 17, in the step S57. The other processes are similar to those shown in FIG. 8.

According to the image processing apparatus 10 of this second embodiment, the Web application refers to the language table location information 166, and thus, each Web application may refer to a different language table location information 166. Consequently, it is possible to use language tables 163 at different locations depending on the Web application, and the system structure becomes more flexible in that the language table 163 may be distributed.

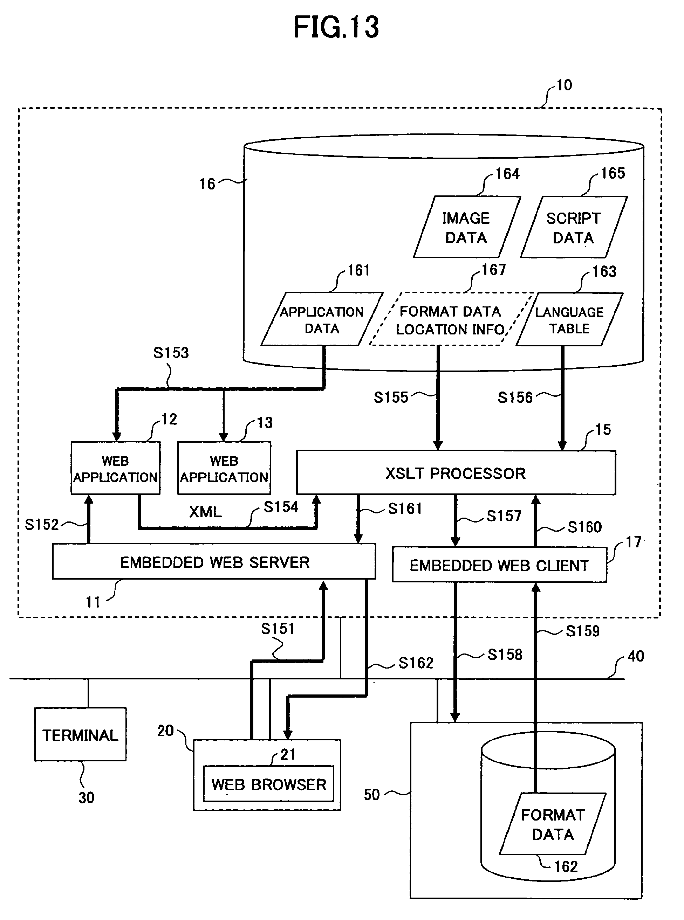

FIG. 13 is a diagram for explaining a Web page generating process of a third embodiment of the electronic apparatus according to the present invention. This second embodiment of the electronic apparatus employs a second embodiment of the Web page generating method according to the present invention. In FIG. 13, those parts which are the same as those corresponding parts in FIG. 8 are designated by the same reference numerals, and a description thereof will be omitted. In this third embodiment, the format data 162 is stored in the resource server 50. In FIG. 13, steps S151 through S162 correspond to the steps S11 through S22 shown in FIG. 8.

In FIG. 13, the format data 162 is stored in the resource server 50 in place of the language table 163. In addition, format data position information 167 is stored in the ROM 16 of the image processing apparatus 10 in place of the format data 162. The format data location information 167 indicates a storage location of the format data 162. For example, the URL or the like of the format data 162 on the network 40 corresponds to the format data location information 167.

The steps S151 through S162 shown in FIG. 13 are basically the same as the steps S11 through S22 shown in FIG. 8, but in FIG. 13, the XSLT processor 15 requests acquisition of the format data 162 with respect to the embedded Web client 17 when generating the Web page 210.

In other words, the XSLT processor 15 refers to the format data position information 167 in the step S155, and requests acquisition of the format data 162 from the location indicated by the format data location information 167 with respect to the embedded Web client 17 in the step S157. The embedded Web client 17 acquires the format data 162 from the resource server 50 by the HTTP in the steps S158 and S159, and the embedded Web client 17 outputs the acquired format data 162 to the XSLT processor 15 in the step S160.

The XSLT processor 15 generates the Web page 210 based on the format data 162 acquired from the resource server 50, the language table 163 acquired from the ROM 16 and the base data 121 generated by the Web application 12, in the step S161. The other processes are similar to those shown in FIG. 8.

Similarly to the first embodiment, the protocol used to acquire the format data 162 from the resource server 50 is not limited to the HTTP.

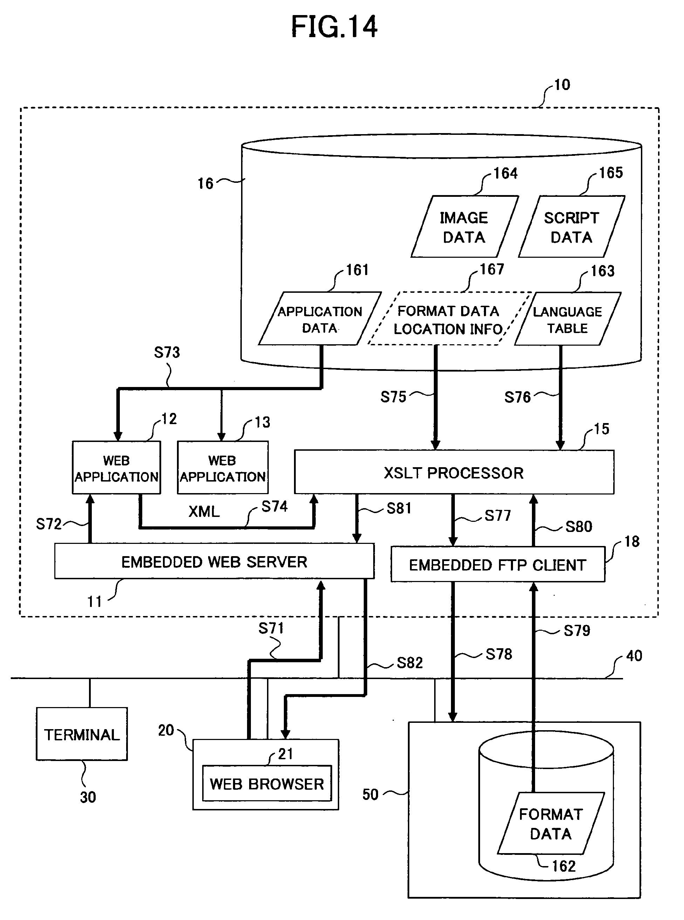

FIG. 14 is a diagram for explaining an acquisition of the format data 162 by the FTP. The differences between FIGS. 14 and 13 are the same as the differences between FIGS. 9 and 8 in the first embodiment. In FIG. 14, those parts which are the same as those corresponding parts in FIG. 13 are designated by the same reference numerals, and a description thereof will be omitted. In FIG. 14, steps S71 through S82 correspond to the steps S151 through S162 shown in FIG. 13.

In other words, processes carried out by the image processing apparatus 10 shown in FIG. 14 in the steps S71 through S82 are basically the same as those carried out by the steps S151 through S162 shown in FIG. 13, except for the steps S78 and S79 which acquire the format data 162 from the resource server 50 by the FTP using the embedded FTP client 18.

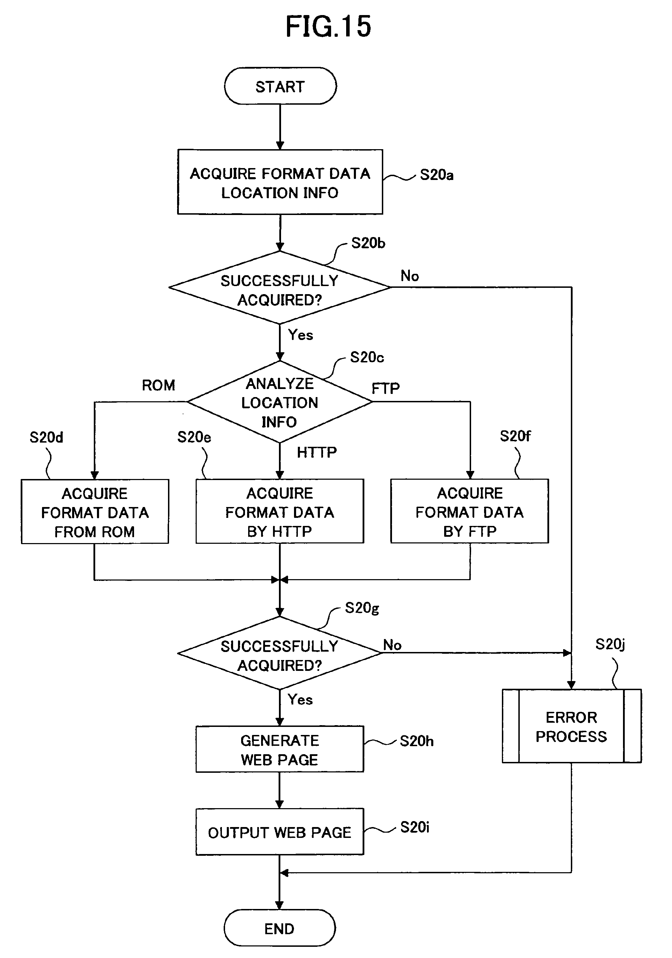

Furthermore, the process of acquiring the format data 162 from the ROM 16, the process of acquiring the format data 162 from the resource server 50 by the HTTP, and the process of acquiring the format data 162 from the resource server 50 by the FTP may be combined. When these processes are combined, the process of the XSLT processor 15 becomes as shown in FIG. 15.

FIG. 15 is a flow chart for explaining the process of the XSLT processor 15 of the third embodiment. Steps S20a through S20j shown in FIG. 15 are basically the same as the steps S10a through S10j shown in FIG. 10, except that the acquisition target is the format data 162 in FIG. 15 while the acquisition target is the language table 163 in FIG. 10, and a description thereof will be omitted.

According to the image processing apparatus 10 of this third embodiment, it is possible to obtain effects similar to those obtainable by the image processing apparatus 10 of the first embodiment.

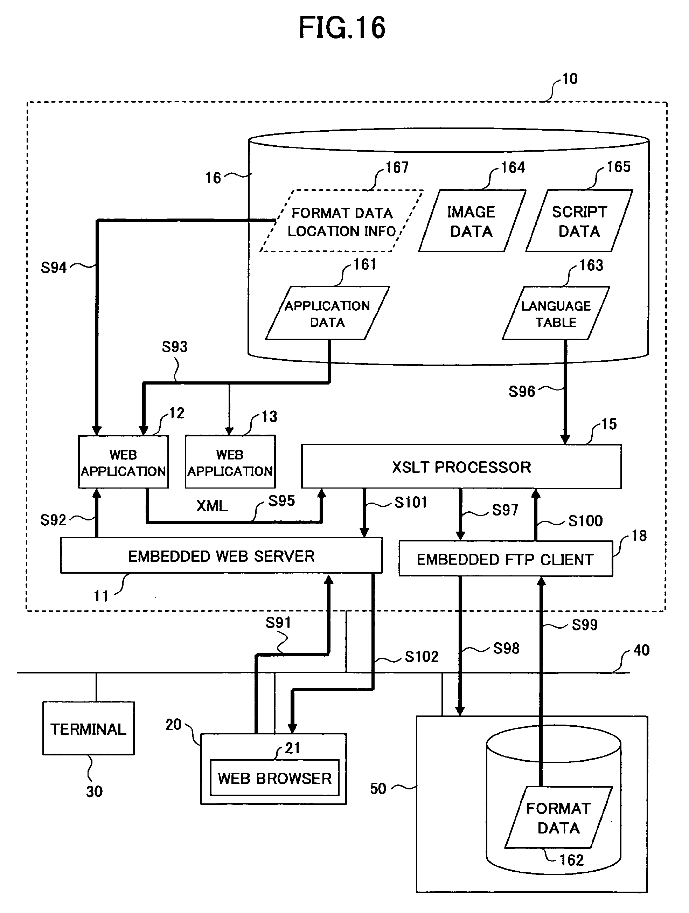

FIG. 16 is a diagram for explaining a Web page generating process of a fourth embodiment of the electronic apparatus according to the present invention. This fourth embodiment of the electronic apparatus employs a fourth embodiment of the Web page generating method according to the present invention. In FIG. 16, those parts which are the same as those corresponding parts in FIG. 11 are designated by the same reference numerals, and a description thereof will be omitted. In this fourth embodiment, each Web application refers to format data location information 167. In FIG. 16, steps S91 through S102 correspond to the steps S51 through S62 shown in FIG. 11.

In FIG. 16, the format data 162 is acquired from the resource server 50, and the image processing apparatus 10 is provided with the embedded FTP client 18 in place of the embedded Web client 17. Otherwise, the image processing apparatus 10 shown in FIG. 16 is basically the same as the image processing apparatus 10 shown in FIG. 11. The differences introduced by the use of the embedded client 18 in place of the embedded Web client 17 are not substantial, and only a slight variation is introduced thereby.

Accordingly, the processes carried out by the image processing apparatus 10 shown in FIG. 16 in the steps S91 through S102 are basically the same as those carried out by the steps S51 through S62 shown in FIG. 11, except for the process which acquires the format data 162 from the resource server 50. In other words, the Web application 12 shown in FIG. 16 refers to the format data location information 167 when generating the base data 121 in the step S94, and the contents of the format data location information 167 are output to the database 121.

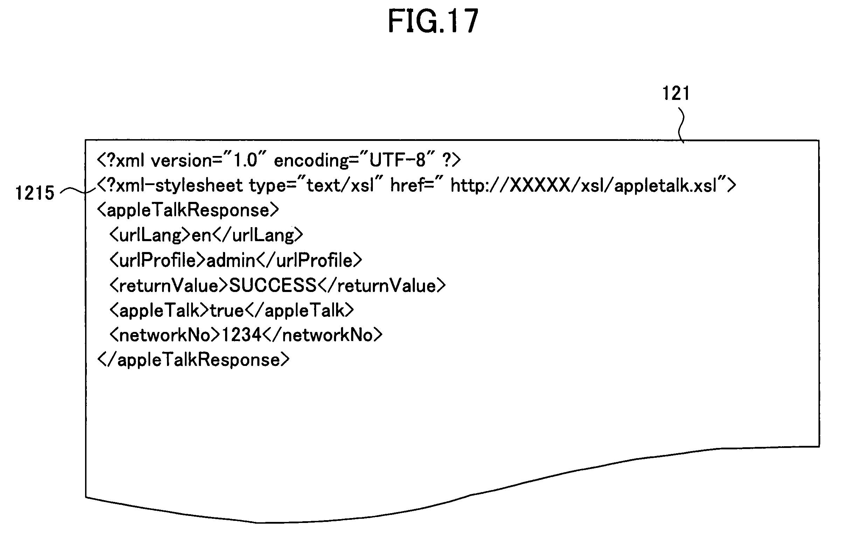

FIG. 17 is a diagram showing a definition of the base data 121 in the fourth embodiment. In the base data 121 shown in FIG. 17, a description 1215 indicating the format data location information 167 is output.

Accordingly, when the XSLT processor 15 of this fourth embodiment receives a request to generate the Web page 210 from the Web application 12 in the step S95, the XSLT processor 15 specifies the location of the format data 162 by referring to the description 1215 of the base data 121, and requests acquisition of the format data 162 with respect to the embedded FTP client 18 in the step S97. The other processes are similar to those shown in FIG. 11.

Therefore, according to the image processing apparatus 10 of this fourth embodiment, it is possible to obtain effect similar to those obtainable by the image processing apparatus 10 of the second embodiment.

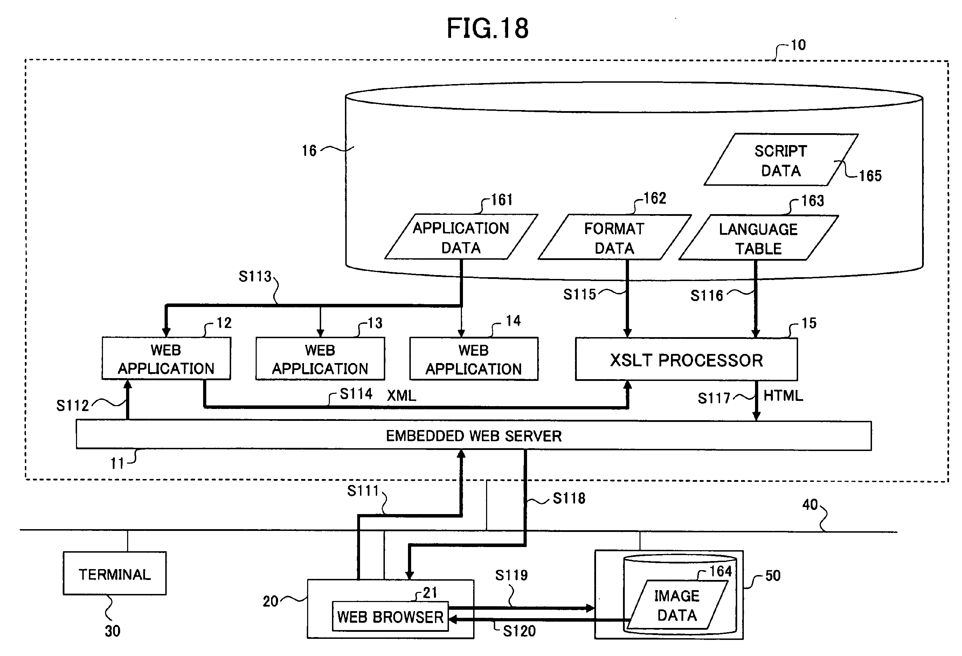

FIG. 18 is a diagram for explaining a Web page generating process of a fifth embodiment of the electronic apparatus according to the present invention. This fifth embodiment of the electronic apparatus employs a fifth embodiment of the Web page generating method according to the present invention. In FIG. 18, those parts which are the same as those corresponding parts in FIGS. 1 and 8 are designated by the same reference numerals, and a description thereof will be omitted. In this fifth embodiment, the image data 164 is stored in the resource server 50.

Unlike the image processing apparatus 1000 shown in FIG. 1, the image processing apparatus 10 shown in FIG. 18 is provided with an XSLT processor 15, and a resource server 50 is connected to the image processing apparatus 10 via the network 40. In addition, the image data 164 is not stored in the ROM 16, but is stored in the resource server 50. The XSLT processor 15 and the resource server 50 shown in FIG. 18 are similar to those shown in FIG. 8.

In FIG. 18, the process of steps S111 through S113 is the same as the process of the steps S1 through S3 shown in FIG. 1. But in FIG. 18, when the Web application 12 generates the base data 121, the Web application 12 outputs the URL or the like with respect to an external server such as the resource server 50, as location information of the image data 164, to the base data 121, in a step S114.

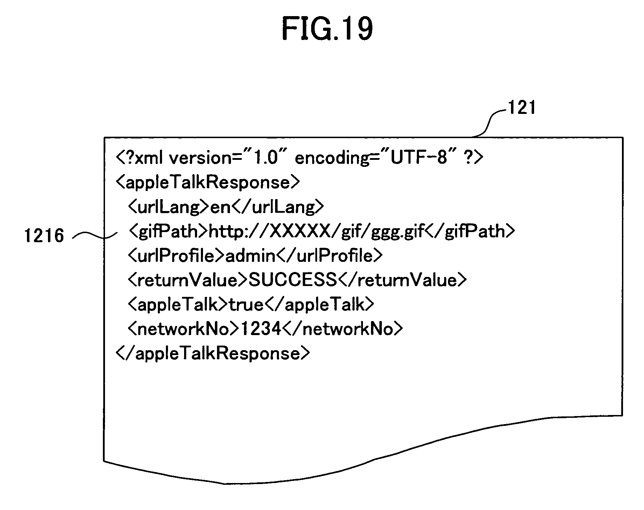

FIG. 19 is a diagram showing a definition of the base data 121 in the fifth embodiment. In the base data 121 shown in FIG. 19, a description 1216 indicating the location information (indicating the location within the resource server 50) of the image data 164 is output.

Accordingly, the XSLT processor 15 acquires the format data 162 and the language table 163 from the ROM 16 in steps S115 and S116. In addition, when the XSLT processor 15 generates the Web page 210 based on the base data 121 in a step S117, the XSLT processor 15 outputs the location information in the description 1216 of the base data 121 to the Web page 210, as the URL of the image data 164 that is to be displayed.

When the Web browser 21 of the terminal 20 receives the generated Web page 210 in a step S118, the Web browser 21 recognizes the need to acquire from the resource server 50 the image data 164 that is to be displayed in the Web page 210, and makes a request requesting the resource server 50 to send the image data 164 in a step S119. When the resource server 50 sends the image data 164 to the terminal 20 in a step S120, the Web browser 21 of the terminal 20 displays the image data 164 in the Web page 210.

As described above, the image processing apparatus 10 of this fifth embodiment generates a Web page which targets an apparatus other than the image processing apparatus 10, such as the resource server 50, as the path for the image data 164. For this reason, the image data 164 can be stored in an apparatus, other than the image processing apparatus 10, that is connected to the network 40, instead of storing the image data 164 in the ROM 16 of the image processing apparatus 10. Hence, the image processing apparatus 10 of this fifth embodiment can obtain effects similar to those obtainable by the image processing apparatus 10 of the first embodiment, with respect to the image data 164.

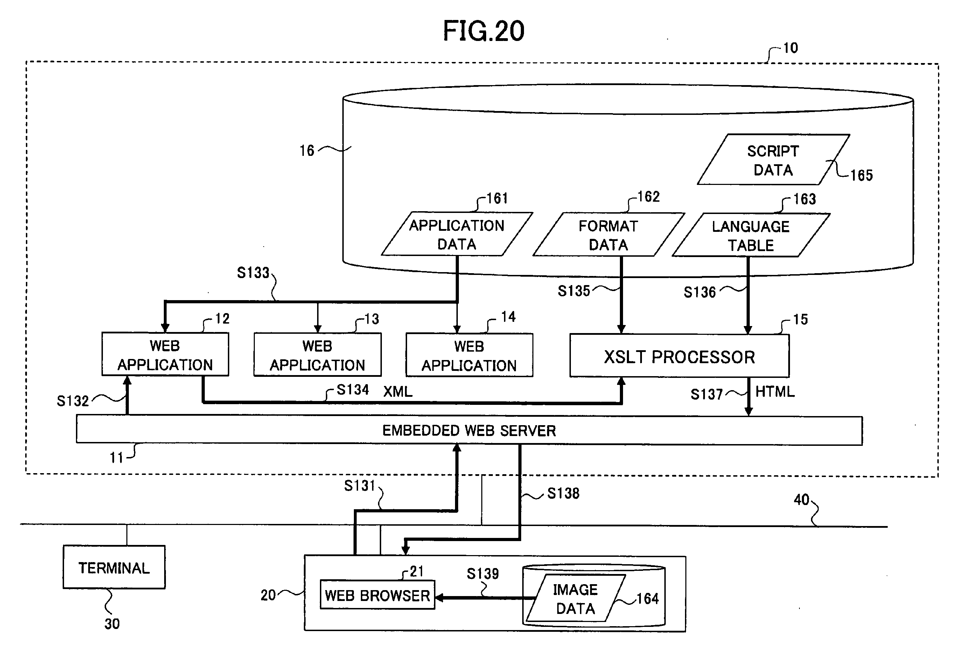

Of course, the image data 164 may be stored in each terminal. FIG. 20 is a diagram for explaining the storage of the image data 164 in the terminal 20. In FIG. 20, those parts which are the same as those corresponding parts in FIG. 18 are designated by the same reference numerals, and a description thereof will be omitted.

As may be seen by comparing FIG. 20 to FIG. 18, the image data 164 is stored in the terminal 20 in FIG. 20. In addition, the illustration of the resource server 50 is omitted in FIG. 20 because the resource server 50 is not essential in this case.

The process of steps S131 through S138 of the image processing apparatus 10 shown in FIG. 20 is basically the same as the process of the steps S111 through S118 of the image processing apparatus 10 shown in FIG. 18, except that when the Web application 12 generates the base data 121 in FIG. 20, the path name within the terminal 20 is output with respect to the base data 121 as the location information of the image data 164.

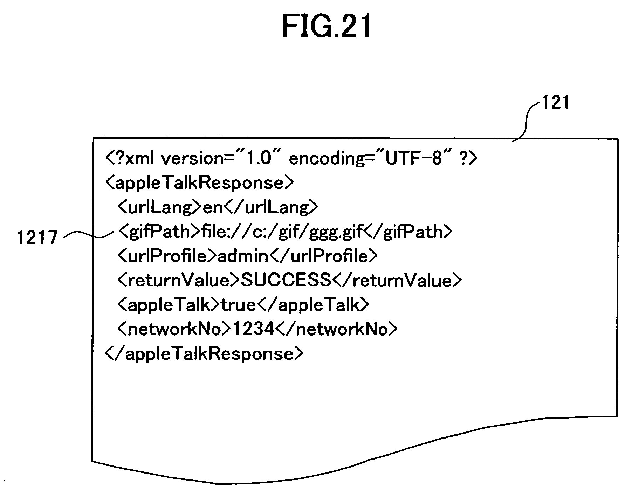

FIG. 21 is a diagram showing a definition of the base data 121 for a case where the path name in the terminal 20 is used as the location information of the image data 164. In the base data 121 shown in FIG. 21, a description 1217 including the path name (file://c:/gif/ggg.gif) in the terminal 20 and indicating the location information of the image data 164 is output.

Hence, in the Web page 210 that is generated by the XSLT processor 15, the path name in the terminal 20 is output as the location information of the image data 164, in the step S137.

The Web browser 21 of the terminal 20 receives the generated Web page 210 in the step S138, and when displaying the Web page 210, the Web browser 21 acquires the image data 164 to be displayed in the Web page 210 from a local file (c:/gif/ggg.gif) of the terminal 20 in a step S139, to display the image data 164 in the Web page 210.

According to the image processing apparatus 10 shown in FIG. 20, the Web page 210 is generated by referring to the image data 164 in each terminal. For this reason, the image data 164 to be displayed in the Web page 210 can be modified with ease by a simple operation of the user at each terminal.

In FIGS. 18 and 20 of the fifth embodiment, the image data 164 is stored in the resource server 50 or the terminal 20, that is, outside the image processing apparatus 10. However, similar effects may be obtained by storing the script data 165 in the resource server 50 or the terminal 20, that is, outside the image processing apparatus 10. In this case, location information of the script data 165 is output to the base data 121 that is generated by the Web application 12, similarly to the above described outputting of the location information of the image data 164.

Next, a description will be given of a sixth embodiment of the electronic apparatus according to the present invention. Recently, Web browsers having an XSL conversion function have been developed. Hence, in this sixth embodiment of the electronic apparatus, the Web browser 21 of the terminal 20 has the XSL conversion function.

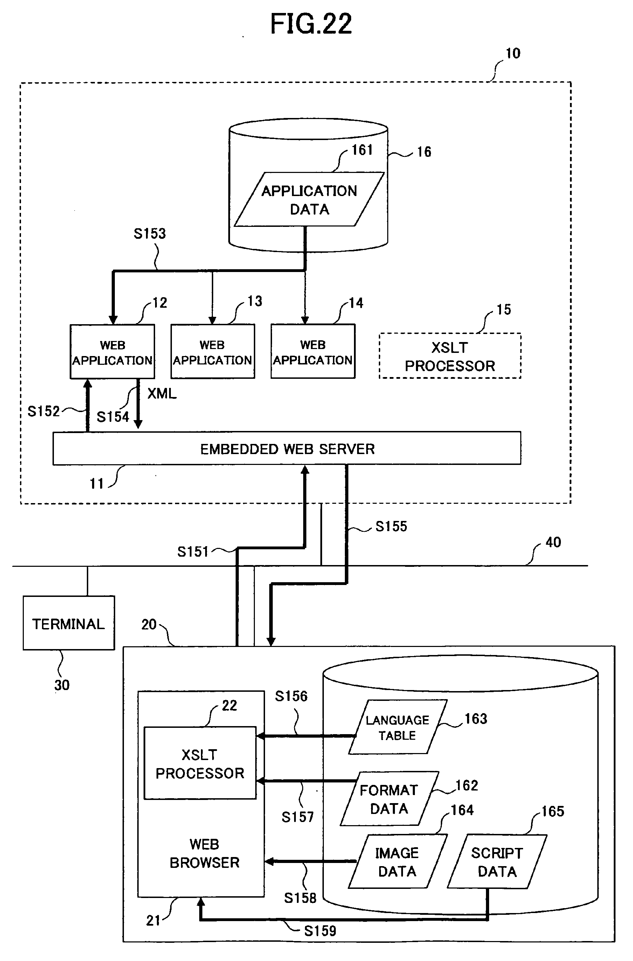

FIG. 22 is a diagram for explaining a process of this sixth embodiment of the electronic apparatus according to the present invention. This sixth embodiment of the electronic apparatus employs a sixth embodiment of the Web page generating method according to the present invention. In FIG. 22, those parts which are the same as those corresponding parts in FIG. 1 are designated by the same reference numerals, and a description thereof will be omitted.

As shown in FIG. 22, only the application data 161 is stored in the ROM 16 of the image processing apparatus 10, and the resource data such as the format data 162, the language table 163, the image data 164 and the script data 165 are stored in the terminal 20.

Further, in FIG. 22, the Web browser 21 of the terminal 20 includes the XSLT processor 22. The XSLT processor 22 is formed by a program which carries out a conversion process according to format information defined in the XSL data by applying the XSL data to the XML data, and generates the XML data, the HTML data and the like according to the format information of the XSL data, similarly to the XSLT processor 15.

Although the image processing apparatus 10 shown in FIG. 22 includes the XSLT processor 15, the XSLT processor 15 is not essential for the process described in conjunction with FIG. 22. In other words, the XSLT processor 15 is not exclusive to this embodiment.

The procedure up to the calling of the Web application 12 by the embedded Web server 11 in response to an HTTP request from the terminal 20, and the generation of the base data 121 by the Web application 12, in steps S151 through S153, is the same as the procedure of the steps S1 through S3 shown in FIG. 1. However, when generating the base data 121, the Web application 12 shown in FIG. 22 outputs the location information of the format data 162, the language table 163, the image data 164, the script data 165 and the like with respect to the base data 121 by the path name in the terminal 20.

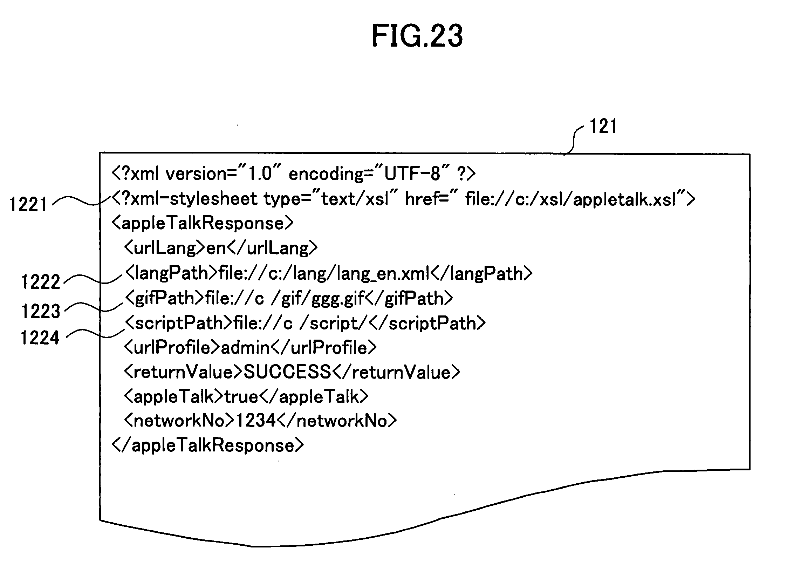

FIG. 23 is a diagram showing a definition of base data in the sixth embodiment. In the base data 121 shown in FIG. 23, descriptions 1221, 1222, 1223 and 1224 respectively indicate the location information of the format data 162, the language table 163, the image data 164 and the script data 165, and the location information is indicated by the path name in the terminal 20.

The embedded Web server 11 receives the base data 121 from the Web application 12 in a step S154.
The embedded Web server 11 judges whether or not the Web browser 21 of the terminal 20 includes the XSL conversion function (XSLT processor 22), and if the Web browser 21 of the terminal 20 includes the XSL conversion function, the embedded Web server 11 sends an HTTP response including the base data 121 to the terminal 20 in a step S155. On the other hand, if the Web browser 21 of the terminal 20 includes no XSL conversion function, the embedded Web server 11 causes the XSLT processor 15 to generate the Web page 210.

The judgement to determine whether or not the Web browser 21 of the terminal 20 includes the XSL conversion function may be made based on version information of the Web browser 21 included in header information of the HTTP request that is sent from the terminal 20.

The Web browser 21 of the terminal 20 which receives an HTTP response from the image processing apparatus 10 makes a request requesting generation of the Web page (HTML data) 210 to the XSLT processor 22. The XSLT processor 22 reads the language table 163 and the format data 162 stored in the terminal 20 based on the descriptions 1221 and 1222 of the base data 121, in steps S156 and S157. Furthermore, the XSLT processor 22 carries out an XSL conversion based on the language table 163 and the format data 162 and generates the Web page 210.

Based on the descriptions 1223 and 1224 of the base data 121 shown in FIG. 23, the location information (path names) of the image data 164 and the script data 165 to be downloaded by the Web browser 21 is output by the XSLT processor 22 to the Web page 210 that is generated.

When displaying the Web page 210, the Web browser 21 reads the image data 164 and the script data 165 stored in the terminal 20, based on the location information of the image data 164 and the script data 165 defined within the Web page 210, in steps S158 and S159, and displays the image data 164 and executes the script data 165.

As described above, the image processing apparatus 10 of this sixth embodiment sends the base data 121, that is, the XML data, and not the Web page (HTML data) 210, with respect to the terminal 20 including the XSL conversion function. Hence, it is possible to reduce the load of the Web page generating process with respect to the terminal 20 that includes the XSL conversion function. In addition, if all of the terminals connected to the image processing apparatus 10 includes the XSL conversion function, it becomes unnecessary to provide the XSLT processor 15 in the image processing apparatus 10, and the cost of the image processing apparatus 10 can be reduced.

Of course, the format data 162, the language table 163, the image data 164, the script data 165 and the like may be stored in a predetermined server on the network 40.

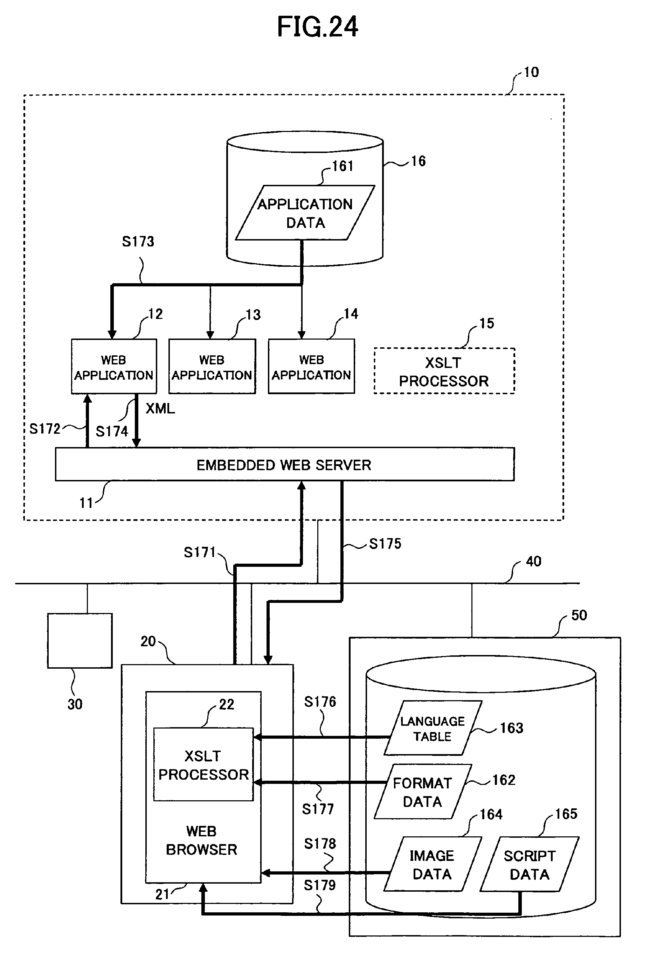

FIG. 24 is a diagram for explaining a storage of resource data in a predetermined server. In FIG. 24, those parts which are the same as those corresponding parts in FIG. 22 are designated by the same reference numerals, and a description thereof will be omitted. In FIG. 24, the resource server 50 is connected to the network 40, unlike in FIG. 22. In addition, in FIG. 24, the resource data such as the format data 162 are stored in the resource server 50, and not in the terminal 20. The resource server 50 shown in FIG. 24 may be the same as the resource server 50 of the first embodiment shown in FIG. 8.

In FIG. 24, the process up to the returning of the HTTP response including the base data 121 from the image processing apparatus 10 in response to the HTTP request from the terminal 20, in steps S171 through S175, is basically the same as the process of the steps S151 through S155 shown in FIG. 22. However, when generating the base data 121, the Web application 12 shown in FIG. 24 outputs the location information of the format data 162, the language table 163, the image data 164, the script data 165 and the like with respect to the base data 121 by the URL with respect to the resource server 50.

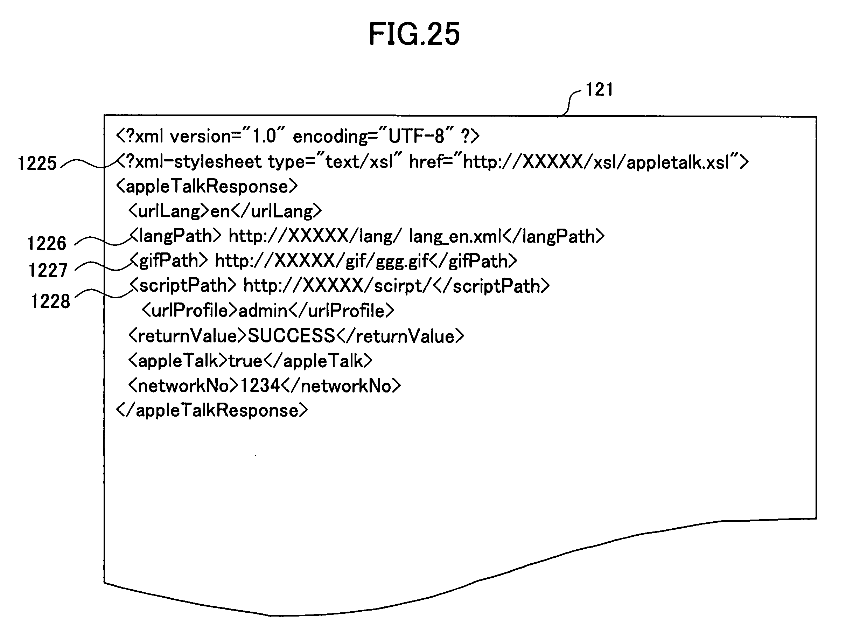

FIG. 25 is a diagram showing a definition of the base data 121 for a case where the resource data is stored in the resource server 50. In the base data 121 shown in FIG. 25, descriptions 1225, 1226, 1227 and 1228 respectively indicate the location information of the format data 162, the language table 163, the image data 164 and the script data 165, and the location information is indicated by the URL with respect to the resource server 50.

The Web browser 21 of the terminal 20 that receives an HTTP response from the image processing apparatus 10 makes a request to the XSLT processor 22 requesting the generation of the Web page (HTML data) 210. The XSLT processor 22 reads the language table 163 and the format data 162 stored in the resource server 50, based on the descriptions 1225 and 1226 of the database 121, in steps S176 and S177, and carries out an XSL conversion based on the base data 121, the language table 163 and the format data 162 to generate the Web page 210.

When displaying the Web page 210, the Web browser 21 downloads the image data 164 and the script data 165 stored in the resource server 50 based on the location information of the image data 164 and the script data 165 defined within the Web page 210, in steps S178 and S179, and displays the image data 164 and executes the script data 165.

According to the image processing apparatus 10 shown in FIG. 24, the base data 121 is generated using the resource server 50 as the location information of the resource data. For this reason, the resource data can be managed centrally at the resource server 50. In addition, the display format of the Web page 210 to be displayed at a plurality of terminals can be modified by simply modifying the resource data at the resource server 50.

Next, a description will be given of a seventh embodiment of the electronic apparatus according to the present invention. In this seventh embodiment, security information of the image processing apparatus 10 is managed by an external server, in an image processing system. The security information at least includes information indicating whether or not the Java script is executable, and parameters such as a port number usable for the HTTP communication.

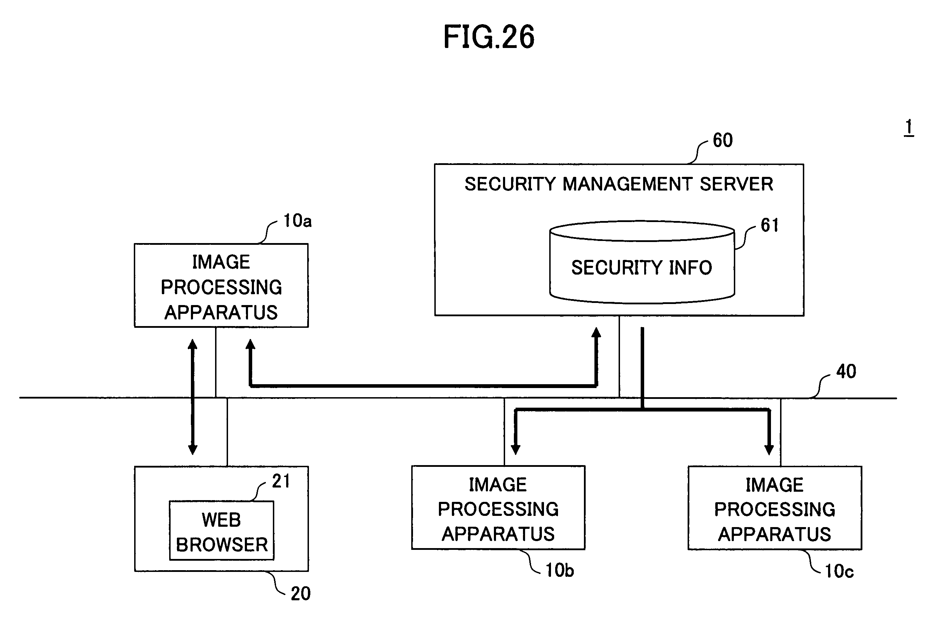

FIG. 26 is a diagram showing a structure of the image processing system employing this seventh embodiment of the electronic apparatus according to the present invention. In an image processing system 1 shown in FIG. 26, a plurality of image processing apparatuses 10 (that is, image processing apparatuses 10a, 10b and 10c), at least one terminal 20, and a security management server 60 are connected via a network 40. The image processing apparatuses 10a, 10b and 10c and the terminal 20 have functional structures similar to those of the image processing apparatus 10 and the terminal 20 of the embodiments described above. The security management server 60 is formed by a computer which centrally manages the security information that was conventionally managed by each of the image processing apparatuses 10a, 10b and 10c. The network 40 may be formed by one or more cable networks, one or more wireless networks or, a combination of cable and wireless networks. The cable networks may be optical networks.

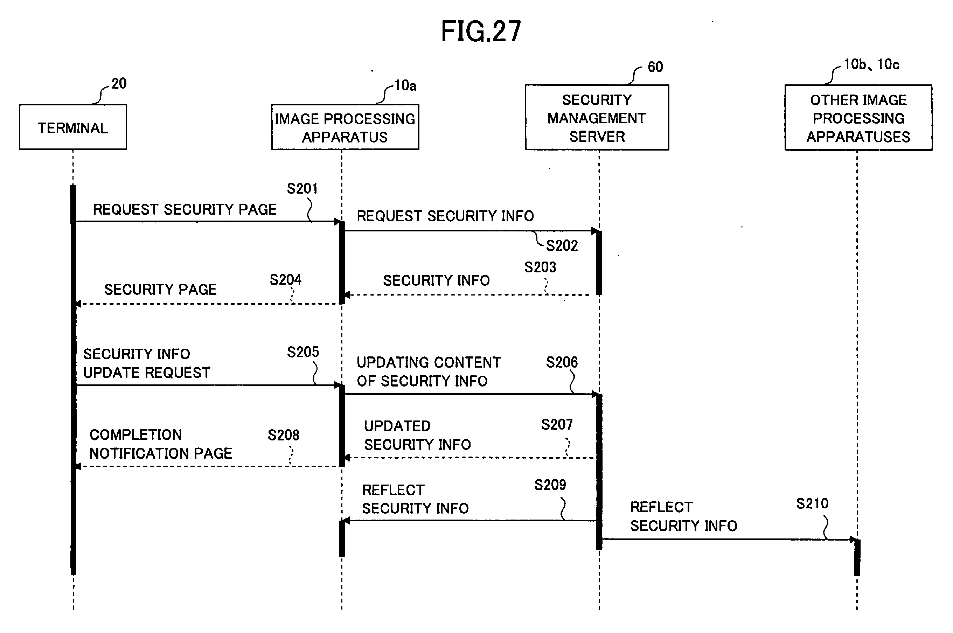

FIG. 27 is a sequence diagram for explaining a security information updating process of the seventh embodiment of the electronic apparatus.

In FIG. 27, when the user of the terminal 20 inputs, to the Web browser 21, the URL with respect to a Web page (hereinafter referred to as "security page") for setting the security information, so as to set security information 61 of the image processing apparatus 10a or the like, the terminal 20 makes a request requesting the image processing apparatus 10a to send the security page, in a step S201. When the image processing apparatus 10a makes a request requesting the security management server 60 which is set in advance as the manager of the security information 61 to send the security information 61 in response to the request from the terminal 20 in a step S202, the security management server 60 returns the security information 61 to the image processing apparatus 10a in a step S203. The image processing apparatus 10a generates the security page so that the received security information 61 is displayed as a present set value, and sends the security page to the terminal 20 in a step S204.

In the security page that is displayed on the Web browser 21 of the terminal 20, the user modifies the security information 61, and when a set button on the security page is clicked (or selected), for example, the terminal 20 makes an update request requesting the image processing apparatus 10a to update the security information 61 in a step S205. When the image processing apparatus 10a sends updating contents of the security information 61 to the security management server 60 in response to the update request from the terminal 20 in a step S206, the security management server 60 updates the security information 61 based on the received updating contents and returns updated security information 61 to the image processing apparatus 10a in a step S207. The image processing apparatus 10a generates a Web page (hereinafter referred to a "completion notification page") for notifying the completion of the updating of the security information 61, and sends the completion notification page together with the updated security information 61 to the terminal 20, in a step S208. The user can confirm whether the updating of the security information 61 is completed normally, from the completion notification page that is displayed on the Web browser 21.

On the other hand, after returning the updated security information 61 to the image processing apparatus 10a, the security management server 60 reflects the updated security information 61 to the image processing apparatuses 10a, 10b and 10c in steps S209 and S210. Accordingly, the image processing apparatuses 10a, 10b and 10c can thereafter operate based on the updated security information 61.

Therefore, according to the image processing system 1 employing this seventh embodiment, the security information of the plurality of image processing apparatuses 10 can be centrally managed by the security management server 60. As a result, it is possible to simply apply the same security information with respect to each of the plurality of image processing apparatuses 10.

Next, a description will be given of an eighth embodiment of the electronic apparatus according to the present invention. In the first embodiment described above, the language table location information 166 is directly written in the ROM 16 of the image processing apparatus 10. For this reason, if a failure is generated in the resource server 50, for example, and it is desirable to change the location from where the language table 163 is to be acquired, it is necessary to rewrite the contents of the ROM 16, thereby making a quick change of the location difficult. Hence, in this eighth embodiment, measures are taken so that the location from where the language table 163 is to be obtained can be changed easily and quickly.

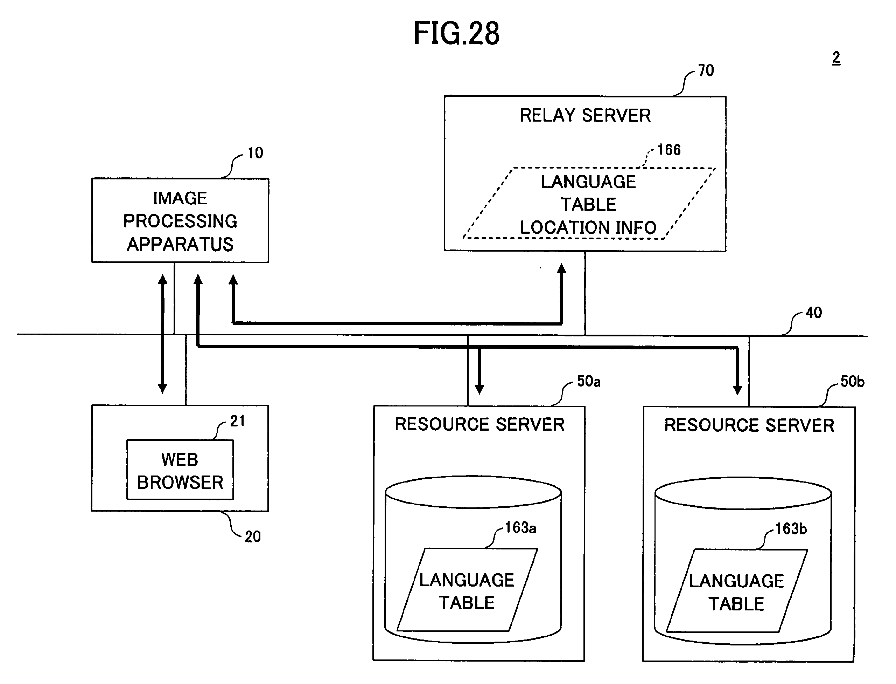

FIG. 28 is a diagram showing a structure of an image processing system employing this eighth embodiment of the electronic apparatus according to the present invention. In FIG. 28, those parts which are the same as those corresponding parts in FIG. 8 are designated by the same reference numerals, and a description thereof will be omitted. In an image processing system 2 shown in FIG. 28, two or more resource servers 50 (that is, resource servers 50a and 50b) are connected to the network 40, and further, a relay server 70 is additionally connected to the network 40.

Each of the resource servers 50a and 50b may be formed by a computer having functions similar to those of the resource server 50 shown in FIG. 8. In other words, the resource server 50a manages a language table 163a, and the resource server 50b manages a language table 163b. The language tables 163a and 163b may be identical or, may be of different versions. In the former case, one of the resource servers 50a and 50b is used as a mirror server with respect to the other.
In the following description, it is assumed for the sake of convenience that the resource server 50b is used as a mirror server with respect to the resource server 50a.

The relay server 70 may be formed by a computer which manages the language table location information 166. In other words, although the language table location information 166 is written in the ROM 16 of the image processing apparatus 10 in FIG. 8, the image processing apparatus 10 shown in FIG. 28 stores the location information (for example, an IP address, an URL or the like) of the relay server 70 and does not store the language table location information 166. In an initial state, it is assumed for the sake of convenience that the URL of the language table 163a managed by the resource server 50a in FIG. 28 is specified in the language table location information 166 within the relay server 70.

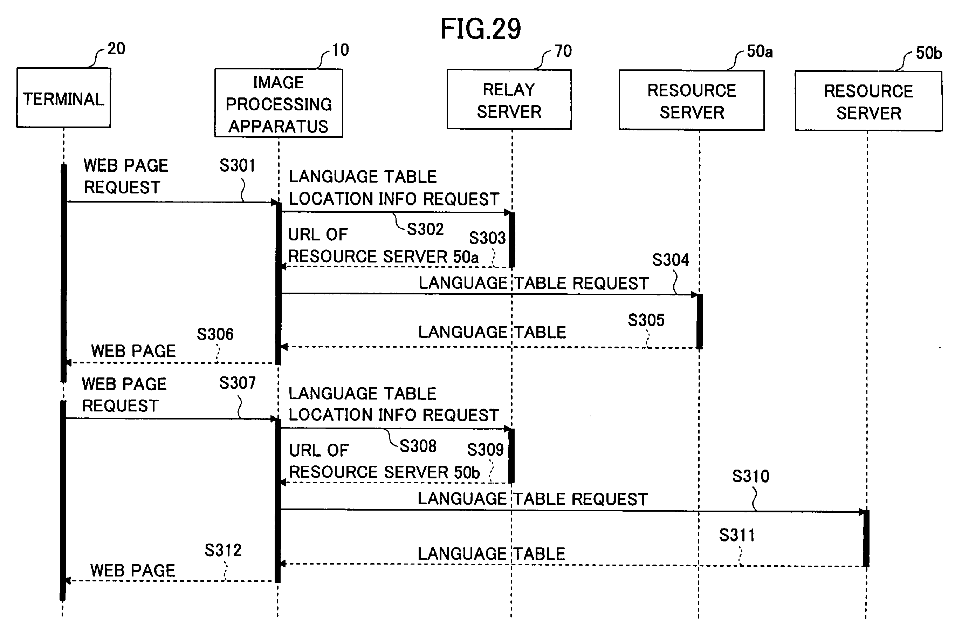

FIG. 29 is a sequence diagram for explaining a Web page generating process of the eighth embodiment of the electronic apparatus.

The process shown in FIG. 29 starts when the terminal 20 makes a request to the image processing apparatus 10 requesting the Web page in a step S301, similarly to the case shown in FIG. 8. When the image processing apparatus 10 makes an inquiry to the relay server 70 regarding the language table location information 166 in response to the request from the terminal 20 in a step S302, the relay server 70 returns the URL of the language table 163a of the resource server 50a, as the language table location information 166, to the image processing apparatus 10 in a step S303. When the image processing apparatus 10 makes a request to the resource server 50a requesting the language table 163a based on the returned language table location information 166 in a step S304, the resource server 50a returns the language table 153a in a step S305.

The image processing apparatus 10 generates a Web page using the returned language table 163a, and sends the Web page to the terminal 20 in a step S306. The details of the Web page generating process is the same as that described above in conjunction with FIG. 26, for example.

For example, if a failure is generated in the resource server 50a, the value of the language table location information 166 in the relay server 70 may be changed to the URL of the language table 163b of the resource server 50b. In this case, if a Web page request is made thereafter from the terminal 20 in a step S307, the image processing apparatus 10 makes an inquiry to the delay server 70 with respect to the language table location information 166 in a step S308, and the relay server 70 returns the URL of the language table 163b as the language table location information 166 in a step S309. Accordingly, the image processing apparatus 10 can acquire the language table 163b from the resource server 50b in steps S310 and S311, and send a Web page generated by use of the language table 163b to the terminal 20 in a step S312.

Therefore, according to the image processing system 2 employing this eighth embodiment, the image processing apparatus 10 inquires the relay server 70 about the language table location information 166 in order to specify the location of the language table 163. Since the relay server 70 may be formed by a general-purpose computer, the language table location information 166 can be written with ease compared to the case where the language table location information 166 is written in the ROM 16 of the image processing apparatus 10. Hence, it is possible to easily change the location from where the language table 163 is to be acquired for use in generating the Web page in the image processing apparatus 10. In this eighth embodiment, the information managed in the resource servers 50a and 50b is the language table 163 (163a and 163b), but it is of course possible to similarly manage other resource data such as the format data 162 in the resource servers 50a and 50b.

In a general Web system which uses a general-purpose computer as a Web server, the Web server generally acquires the information (contents) to be displayed in the Web page from an external server such as a database server. However, in the embodiments described above, the information acquired by the image processing apparatus 10 from the outside is not the contents, but the information related to the framework for displaying the contents. In other words, the information acquired by the image processing apparatus 10 is framework information forming a Graphical User Interface (GUI) of the Web page. Accordingly, the information acquired by the image processing apparatus 10 is completely different from the information acquired by the Web server of the general Web system. For example, the language table 163 includes character strings used for menu labels, table item names, titles and the like. In addition, the format data 162 includes information prescribing a layout of the Web page.

Generally, the framework information is managed by an apparatus which generates the Web page, that is, an apparatus similar to the image processing apparatus 10 of the embodiments described above. Particularly in the case of embedded devices such as a printer, the framework information is prestored in a ROM by a vendor. For this reason, the framework information is not stored under a precondition that the framework information will be modified by the end user. On the contrary, in many cases the framework information is enciphered so that the end user will not be able to modify the framework information or, no interface is provided that would enable modification of the framework information. Hence, if the framework information includes a bug, such as a case where an error exists in the character string of the menu label, for example, it would be extremely difficult to enable the end user to correct the bug as if putting a patch on the general-purpose computer.

The bug in the framework information can easily be corrected by managing the framework information in the resource server 50 which may be formed by a general-purpose computer. As a particular application, the resource server 50 may be managed by the vendor. In other words, by placing the resource server 50 under the management of the vendor and correcting or updating the framework information by the vendor, it becomes possible to simultaneously modify the display format of the Web page provided by each of a plurality of image processing apparatuses 10 at the end users.

In the embodiments described above, the image processing apparatus is described as an embodiment of the electronic apparatus or embedded device (or embedded equipment) according to the present invention. However, the present invention is of course applicable to apparatuses other than the image processing apparatus, such as general-purpose computers, portable telephones, portable information terminals, microwave ovens, refrigerators, washing machines, television sets, video decks (or recorders), HDD recorders, audio equipments, digital cameras, routers, wireless LANs, hubs and automobiles, which may be embedded with a communication function.

Further, the present invention is not limited to these embodiments, but various variations and modifications may be made without departing from the scope of the present invention.

## Claims

1. An electronic apparatus **characterized by**:
display format data acquiring means (17) for acquiring, via a network, display format data including information related to a display format of a Web page that is requested to be displayed; and
Web page generating means (12, 15) for generating the Web page based on the display format data acquired by said display format data acquiring means.

2. The electronic apparatus as claimed in claim 1, further **characterized by**:
communicating means (11) for requesting said Web page generating means to generate the Web page in response to a Web page request received via the network, and returning the Web page generated by said Web page generating means as a response with respect to the Web page request.

3. The electronic apparatus as claimed in claim 1 or 2, **characterized in that** the display format data includes format information definition data (162) which defines format information of the Web page.

4. The electronic apparatus as claimed in any of claims 1 to 3, **characterized in that** the display format data includes display character string definition data (163) which defines a character string representing display information to be displayed in the Web page.

5. The electronic apparatus as claimed in claim 4, **characterized in that** the display character string definition data is defined depending on a kind of language.

6. The electronic apparatus as claimed in any of claims 1 to 5, **characterized in that** said Web page generating means comprises:
a plurality of display information generating means (12) for generating display information data including display information to be displayed in the Web page; and
data conversion means (15), used in common regardless of kinds of the plurality of display information generating means, for carrying out a predetermined conversion process based on the display format data and the display information data so as to generate the Web page.

7. The electronic apparatus as claimed in claim 6, **characterized in that** said data conversion means refers to storage location information (166, 167) stored in the electronic apparatus and indicating a storage location of the display format data, and requests acquisition of the display format data from the storage location specified by the storage location information with respect to said display format data acquiring means.

8. The electronic apparatus as claimed in claim 6, **characterized in that**:
said display information generating means refers to storage location information (166, 167) stored in the electronic apparatus and indicating a storage location of the display format data, and generates the display information including the storage location information; and
said data conversion means requests acquisition of the display format data from the storage location specified by the storage location information included in the display information data with respect to the display format data acquiring means.

9. The electronic apparatus as claimed in any of claims 1 to 6, **characterized in that** said display format data acquiring means specifies a location from where the display format data is to be acquired, based on storage location information (166) managed by another electronic apparatus (7) which is coupled to the network and indicates a storage location of the display format data.

10. The electronic apparatus as claimed in claim 6, **characterized in that**:
the display format data includes format information definition data (162) which defines format information of the Web page, and display character string definition data (163) which defines a character string representing display information to be displayed in the Web page;
the display character string definition data is defined depending on a kind of language;
the display information data and the display character string definition data are XML format data;
the format information definition data is an XSL format data; and
said data conversion means generates the Web page by carrying out an XSL conversion based on the display information data, the display character string definition data and the format information definition data.

11. The electronic apparatus as claimed in any of claims 1 to 10, **characterized in that** said display format data acquiring means acquires the display format data from another electronic apparatus (50) by HTTP.

12. The electronic apparatus as claimed in any of claims 1 to 10, **characterized in that** said display format data acquiring means acquires the display format data from another electronic apparatus (50) by FTP.

13. The electronic apparatus as claimed in any of claims 1 to 12, **characterized by**:
a plurality of applications to carry out processes peculiar to composite services of a printer, a copying machine or a facsimile machine.

14. The electronic apparatus as claimed in any of claims 1 to 13, **characterized in that** the display format of the Web page included in the display format data comprises framework information.

15. An electronic apparatus for providing a Web page to be displayed on a display unit (20) which is coupled to the electronic apparatus via a network, **characterized by**:
Web page generating means (12, 15) for generating the Web page that causes the display unit to acquire data (164, 165) used by the Web page from another electronic apparatus (50).

16. The electronic apparatus as claimed in claim 15, **characterized in that** the data that the Web page causes the display unit to acquire includes imager data (164) to be displayed in the Web page.

17. The electronic apparatus as claimed in claim 15 or 16, **characterized in that** the data that the Web page causes the display unit to acquire includes script data (165) which defines scripts to be executed by the display unit.

18. An electronic apparatus comprising display information generating means (17) for generating display information data that includes display information to be provided via a network to a display unit (20) having an XSL conversion function (22), **characterized in that**:
said display information generating means generates the display data so as to include location information of format information data (162) having the format information to be applied to the display information data; and
said display unit generates a Web page, by acquiring the format information data from another electronic apparatus (20, 50) different from the electronic apparatus based on the location information included in the display information data, and carrying out an XSL conversion by applying the format information data to the display information data.

19. The electronic apparatus as claimed in claim 18, **characterized in that** the display format of the Web page included in the display format data comprises framework information.

20. A Web page generating method for an electronic apparatus, **characterized by**:
a display format data acquiring procedure (S10e, S10f, S304, S305) acquiring, via a network, display format data including information related to a display format of a Web page that is requested to be displayed; and
a Web page generating procedure (S10h) generating the Web page based on the display format data acquired by said display format data acquiring procedure.

21. The Web page generating method as claimed in claim 20, **characterized in that** the display format data includes format information definition data (162) which defines format information of the Web page.

22. The Web page generating method as claimed in claim 20 or 21, **characterized in that** the display format data includes display character string definition data (163) which defines a character string representing display information to be displayed in the Web page.

23. The Web page generating method as claimed in claim 22, **characterized in that** the display character string definition data is defined depending on a kind of language.

24. The Web page generating method as claimed in any of claims 20 to 23, further **characterized by**:
a storage location information acquiring procedure (S302, S303) acquiring, via a network, storage location information (166) which indicates a storage location of the display format data from another electronic apparatus (70); and
said display format data acquiring procedure (S304, S305) specifies a location from where the display format data is to be acquired, based on the storage location information.

25. The Web page generating method as claimed in any of claims 20 to 24, wherein the display format of the Web page included in the display format data comprises framework information.

26. A Web page generating method for an electronic apparatus, **characterized by**:
a Web page generating procedure (S113-S117) generating a Web page which causes a display unit (20), which is coupled to the electronic apparatus via a network, to acquire data used in the Web page from another electronic apparatus (50) which is different from the electronic apparatus, in response to a Web page request from the display unit; and
a Web page sending procedure (S118) sending the Web page generated by said Web page generating procedure to the display unit.

27. A Web page generating method which uses a display unit (20) having an XSL conversion function (22) and displaying a Web page generated by use of the XSL conversion function, and an electronic apparatus (10) providing display information to be displayed in the Web page to the display unit, **characterized by**:
a display information data generating procedure (S153, S154) generating display information data including location information of format information data (162) which includes the display information and format information of the Web page, by the electronic apparatus, in response to a request from the display unit; and
a Web page generating procedure (S156, S157) generating the Web page, by the display unit, by acquiring the format information data (162) from another electronic apparatus (20, 50) different from the electronic apparatus based on the location information included in the display information data received from the electronic apparatus, and carrying out an XSL conversion by applying the format information data to the display information data.
